(19) Europäisches Patentamt / European Patent Office / Office européen des brevets

(11) **EP 4 168 168 B1**

(12) **EUROPÄISCHE PATENTSCHRIFT**

(45) Veröffentlichungstag und Bekanntmachung des Hinweises auf die Patenterteilung:
**20.03.2024 Patentblatt 2024/12**

(21) Anmeldenummer: **21732271.8**

(22) Anmeldetag: **10.06.2021**

(51) Internationale Patentklassifikation (IPC):
**B01F 25/82** *(2022.01)* **B01F 25/83** *(2022.01)*
**B29B 7/78** *(2006.01)*

(52) Gemeinsame Patentklassifikation (CPC):
**B29B 7/78; B01F 25/821; B01F 25/8211; B01F 25/823; B01F 25/83; B29B 9/16**

(86) Internationale Anmeldenummer:
**PCT/EP2021/065642**

(87) Internationale Veröffentlichungsnummer:
**WO 2021/254876 (23.12.2021 Gazette 2021/51)**

(54) **MISCHSILO FÜR SCHÜTTGUT, HERSTELLUNGSANLAGE MIT EINEM DERARTIGEN MISCHSILO SOWIE VERFAHREN ZUM BETREIBEN EINES DERARTIGEN MISCHSILOS**

MIXING SILO FOR BULK MATERIAL, PRODUCTION PLANT WITH A MIXING SILO OF THIS KIND, AND METHOD FOR OPERATING A MIXING SILO OF THIS KIND

SILO DE MÉLANGE POUR MATÉRIAU EN VRAC, INSTALLATION DE PRODUCTION DOTÉE D'UN TEL SILO DE MÉLANGE, ET PROCÉDÉ DE FONCTIONNEMENT D'UN TEL SILO DE MÉLANGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.06.2020 DE 102020207608**

(43) Veröffentlichungstag der Anmeldung:
**26.04.2023 Patentblatt 2023/17**

(73) Patentinhaber: **Coperion GmbH**
**70469 Stuttgart (DE)**

(72) Erfinder:
• **DÜRR, Michael**
**88364 Wolfegg (DE)**
• **ZECHNER, Egon**
**88214 Ravensburg (DE)**

(74) Vertreter: **Rau, Schneck & Hübner Patentanwälte Rechtsanwälte PartGmbB Königstraße 2 90402 Nürnberg (DE)**

(56) Entgegenhaltungen:
DE-U1- 8 810 607 JP-U- S6 436 028
JP-U- S49 122 460 US-A- 4 978 227

**Beschreibung**

Die vorliegende Patentanmeldung nimmt die Priorität der deutschen Patentanmeldung DE 10 2020 207 608.1 in Anspruch.

Die Erfindung betrifft ein Mischsilo für Schüttgut, eine Herstellungsanlage mit einem derartigen Mischsilo sowie ein Verfahren zum Betreiben eines derartigen Mischsilos.

DE 88 10 607 U1 offenbart einen Mischbehälter gemäß dem Oberbegriff des Anspruchs 1 mit einer zentralen Auslauföffnung und weiteren Auslauföffnungen, die ein Mischen des Schüttguts im Behälter ermöglichen. Durch Mischeinbauten wird die Fließgeschwindigkeit des Schüttguts derart beeinflusst, dass eine breite Verweilzeitverteilung des Schüttguts im Behälter erzeugt wird. Dadurch erfolgt eine zuverlässige Vermischung des Schüttguts. Schüttgut, welches zu unterschiedlichen Zeitpunkten in den Behälter zugegeben wird, kann gleichzeitig am Auslauf aus dem Behälter abgegeben werden. Die breite Verweilzeitverteilung führt zu einer erhöhten Verweilzeit des Schüttguts. Die erhöhte Verweilzeit kann ein Mehrfaches, insbesondere bis zu dem 3-fachen oder mehr der Verweilzeit bei einem Schüttgutstrom annehmen, das nach dem "first in - first out"-Prinzip, der sogenannten Propfenströmung, durch den Mischbehälter fließt. Bei dem "first in - first out"-Prinzip verlässt Schüttgut, das zuerst in den Behälter zugeführt wurde, das Silo zuerst. Bei einem Produktwechsel wird Schüttgut für ein neues Produkt zu dem Behälter gefördert, in dem noch Schüttgut für ein vorheriges Produkt vorhanden ist. Neues Produkt kann erst verwendet werden, wenn das Schüttgut für das vorherige Produkt vollständig aus dem Behälter entfernt ist. In dieser Übergangszeit fällt ein sogenanntes Übergangsprodukt an, das die Schüttgüter für das vorherige Produkt und das neue Produkt umfasst. Das Übergangsprodukt kann für die Weiterverarbeitung typischerweise nicht verwendet werden und muss beispielsweise als sogenannte B- oder C-Ware ausgesondert werden.

DE 10 34 464 B offenbart eine Vorrichtung zum Mischen von körnigem Gut mit mehreren außerhalb des Mischsilos zusammengeführten Ablaufrohren.

DE 10 2014 108 270 A1 offenbart ein Silo zur Speicherung von Schüttgut sowie ein Verfahren zur Entnahme von Schüttgut aus einem Silo.

US 2006/0082138 A1 offenbart eine T-förmige Flanschverbindung.

Es ist eine Aufgabe der vorliegenden Erfindung, einen Produktwechsel in einer Herstellungsanlage für Kunststoff zu verbessern und insbesondere die Menge von auszusonderndem Schüttgut zu reduzieren.

Die Aufgabe ist erfindungsgemäß gelöst durch ein Mischsilo mit den im Anspruch 1 angegebenen Merkmalen, durch eine Herstellungsanlage mit den im Anspruch 9 angegebenen Merkmalen sowie durch ein Verfahren mit den im Anspruch 11 angegebenen Merkmalen.

Erfindungsgemäß wurde erkannt, dass die Übergangszeit von Schüttgut in einem Mischsolo und damit die Menge des auszusondernden Schüttguts reduziert ist, wenn die Betriebsweise des Mischsilos zwischen einer Mischfunktion mit einer breiten Verweilzeitverteilung und einer Durchflussfunktion mit einer schmalen Verweilzeitverteilung wechselweise betrieben werden kann. Für die Mischfunktion ist mindestens ein in einem Silobehälter befestigter Mischeinbau vorgesehen. Als Mischeinbau im Sinne der Erfindung wird ein Mischeinbau verstanden, der die Verweilzeit des Schüttguts im Mischsilo verändert, insbesondere erhöht. Insbesondere sind Einbauten in dem Silobehälter, die keinen Verweilzeit erzeugenden Effekt auf das Schüttgut haben, keine Mischeinbauten im Sinne der Erfindung. Keine Verweilzeit erzeugenden Mischeinbauten sind beispielsweise Befestigungselemente, insbesondere Haltestreben, Haltestangen und/oder Bleche, wobei die Befestigungselemente insbesondere nur zur Befestigung des Mischeinbaus im Silobehälter dienen.

Es können auch mehrere Mischeinbauten in dem Silobehälter vorgesehen und darin befestigt sein. Der Mischeinbau ist insbesondere statisch ausgeführt, weist also keine beweglichen Elemente wie Rührer und/oder Schaufeln auf. Für die Durchflussfunktion ist mindestens ein Absperrelement vorgesehen, das zum Absperren des mindestens einen Mischeinbaus dient. Insbesondere können auch mehrere Absperrelemente für den mindestens einen Mischeinbau vorgesehen sein. Das mindestens eine Absperrelement ist insbesondere innerhalb des Silo-Behälters angeordnet. Das mindestens eine Absperrelement kann auch außerhalb des Silo-Behälters angeordnet sein, insbesondere dann, wenn der mindestens eine Mischeinbau zumindest bereichsweise außerhalb des Silobehälters verläuft oder außerhalb des Silobehälters angeordnet ist.

Der Silobehälter weist einen Auslauf auf, der insbesondere an einem unteren Ende des Silobehälters angeordnet ist. Der Auslauf wird insbesondere durch eine Ablauföffnung gebildet. Der mindestens eine Mischeinbau weist einen Einlauf und einen Auslauf auf. Der Auslauf des Mischeinbaus ist insbesondere stromaufwärts des Auslaufs des Silobehälters angeordnet ist. Der Auslauf des mindestens einen Mischeinbaus mündet insbesondere in den Auslauf des Silobehälters.

Der Volumenanteil des mindestens einen Mischeinbaus ist klein gegenüber dem Nettovolumen des Silobehälters. Insbesondere ist das Verhältnis kleiner als 0,1, insbesondere kleiner als 0,05 und insbesondere kleiner als 0,01.

Das mindestens eine Absperrelement kann am Einlauf des Mischeinbaus, am Auslauf des Mischeinbaus und/oder dazwischen angeordnet sein. Die Anordnung des mindestens einen Absperrelements am Auslauf des Mischeinbaus ist unkompliziert realisierbar. Insbesondere ist der Auslauf des Mischeinbaus von einer Unterseite des Silobehälters her gut zugänglich. Das mindestens eine Absperrelement kann an dem Auslauf des Mischeinbaus unkompliziert angebracht, nachgerüstet, repariert und/oder gewartet werden.

Die Anordnung des mindestens einen Absperrelements am Einlauf ermöglicht es zu verhindern, dass zusätzliches Schüttgut bei abgesperrtem Mischeinbau in den Mischeinbau gelangen kann. Vorhandenes Schüttgut kann trotz abgesperrtem Mischeinbau über den, insbesondere unten angeordneten, Auslauf aus dem Mischeinbau ausströmen. Dadurch ist verhindert, dass das Pulvermaterial in dem Mischeinbau unbeabsichtigt verbleibt, wobei das stagnierende Pulvermaterial in dem Mischeinbau verfestigen könnte.Die Anordnung des mindestens einen Absperrelements am Einlauf des Mischeinbaus ist insbesondere für das Mischen von Pulvermaterial vorteilhaft, insbesondere Polypropylen(PP-)pulver und/oder Pulver von linearem Polyethylen niederer Dichte (LLDPE).

Das mindestens eine Absperrelement ist zwischen einer Schließstellung, in der ein Schüttgutstrom durch den Mischeinbau verhindert ist, und einer Offenstellung, in der ein Schüttgutstrom durch den Mischeinbau möglich ist, verlagerbar. In der Offenstellung des mindestens einen Absperrelements weist das Mischsilo die Mischfunktion auf. In der Schließstellung des mindestens einen Absperrelements weist das Mischsilo die Durchflussfunktion auf.

Die Durchflussfunktion ist dadurch gewährleistet, dass der Silobehälter bei abgesperrtem Mischeinbau eine Restquerschnittsfläche aufweist, die einen Massestrom des Schüttguts gewährleistet, der größer oder gleich einer Mindestabzugsleistung des Mischsilos ist. Die Restquerschnittsfläche ist insbesondere limitierend für den Silobehälter. Das bedeutet, dass die limitierende Restquerschnittsfläche eine minimale Querschnittsfläche des Silobehälters entlang der Strömungsrichtung des Schüttguts darstellt. Insbesondere kann die limitierende Restquerschnittsfläche kleiner sein als eine Auslaufquerschnittsfläche am Auslauf des Silobehälters. Die Auslaufquerschnittsfläche des Silobehälters entspricht der Querschnittsfläche des Silobehälters bei geöffnetem Mischeinbau. Durch die limitierende Restquerschnittsfläche ist insbesondere ein maximal möglicher Massestrom bei abgesperrtem Mischeinbau festgelegt. Erfindungsgemäß wurde erkannt, dass die Durchflussfunktion des Mischsilos bei abgesperrtem Mischeinbau aufgrund der ausreichenden Größe der Restquerschnittsfläche gewährleistet ist. Das bedeutet, dass auch bei deaktivierter Mischfunktion des Mischsilos durch abgesperrten Mischeinbau, die Leistung, also der Massestrom durch das Mischsilo, aufrechterhalten bleibt. Dadurch ist gewährleistet, dass die Verweilzeit des Schüttguts in der Durchflussfunktion reduziert ist. Bei einem Produktwechsel ist die Übergangszeit und damit die Menge des auszusondernden Schüttguts reduziert.

In der Durchflussfunktion funktioniert das Mischsilo nach dem "first in - first out"-Prinzip. Das Mischsilo wird insbesondere im Massenfluss betrieben.

Die Mindestabzugsleistung ist ein für das Mischsilo charakteristischer Kennwert. Die Mindestabzugsleistung wird auch als Durchsatzleistung bezeichnet. Die Mindestabzugsleistung für ein Mischsilo wird üblicherweise so ausgelegt, dass die Prozessleistung, insbesondere die Extruderleistung, durch das Mischsilo nicht limitiert wird. Um dies sicherzustellen, wird die Prozessleistung mit einem Sicherheitsfaktor von beispielsweise mindestens 1,1, insbesondere mindestens 1,3, insbesondere mindestens 1,5 oder höher multipliziert. Die Mindestabzugsleistung beträgt insbesondere mindestens 20 t/h, insbesondere mindestens 40 t/h, insbesondere mindestens 60 t/h und insbesondere mindestens 80 t/h.

Die mittlere Verweilzeit $t_{Vm}$ des Mischguts im Mischsilo kann aus dem Nettovolumen $V_n$ des Silobehälters, der Mindestabzugsleistung $Q_{min}$ und der Schüttgutdichte $\rho$ der Schüttgutdichte wie folgt berechnet werden:

$$T_{Vm} = V_n / (Q_{min} \cdot \rho).$$

Die mittlere Verweilzeit beträgt für ein erfindungsgemäßes Mischsilo zwischen 0,3h bis 24h, insbesondere zwischen 0,4h bis 22h und insbesondere zwischen 0,5h und 20h.

Die Mindestabzugsleistung ist für das Mischsilo insbesondere veränderlich festlegbar. Der Massestrom des Schüttguts im Massenflussbetrieb beträgt insbesondere das Doppelte, insbesondere mindestens das 3-fache, insbesondere mindestens das 4-fache, insbesondere mindestens das 5-fache, insbesondere mindestens das 10-fache und insbesondere höchstens das 20-fache der Mindestabzugsleistung.

Die limitierende Restquerschnittsfläche des Silobehälters ist insbesondere vollflächig oder hohlflächig. Die Restquerschnittsfläche weist insbesondere eine runde Außenkontur auf. Die Restquerschnittsfläche ist insbesondere kreisförmig oder ringförmig. Die Außenkontur der Querschnittsfläche kann auch unrund, beispielsweise oval oder polygonal ausgeführt sein. Sofern eine Innenkontur der Restquerschnittsfläche vorgesehen ist, ist diese insbesondere rund, kann aber auch unrund, insbesondere oval oder polygonal, ausgeführt sein. Es sind beliebige Kombinationen aus Innen- und Außenkontur möglich.

Es wurde gefunden, dass der Massestrom durch die limitierende Restquerschnittsfläche berechnet werden kann.

Für kreisrunde und nicht kreisrunde Öffnungen gilt die sogenannte Beverloo-Gleichung:

$$\dot{M} = C\rho\sqrt{g}(D_0 - kd)^{5/2} \qquad (1)$$

In der Gleichung (1) bedeuten $\dot{M}$ den Massestrom in kg/s, $\rho$ die Schüttgutdichte in kg/m³, g die Erdbeschleunigung (9,81 m/s²), $D_0$ den Durchmesser einer kreisrunden Auslauföffnung bzw. den hydraulischen Durchmesser einer nicht-kreisförmigen Öffnung in m, d den Partikeldurchmesser des Schüttguts in m, C einen empirischen Austragskoeffizienten, der insbesondere abhängig von Produktreibung und Schüttgutdichte ist und typischerweise zwischen 0,55 und 0,65, insbesondere bei 0,58 liegt, sowie k einen empirischen Partikelkoeffizienten, der insbesondere abhängig von Partikelform und Konusöffnungswinkel am Mischsilo ist und in einem Bereich zwischen 1,0 und 2,0, insbesondere bei 1,6 liegt.

Entsprechend muss eine kreisrunde oder nicht-kreisrunde Restquerschnittsfläche bei einer vorgegebenen Mindestabzugsleistung $\dot{M}_{min}$ einen Durchmesser bzw. hydraulischen Durchmesser $D_0$ wie folgt aufweisen

$$D_0 \geq \left(\frac{\dot{M}_{min}}{\sqrt{g} \cdot C \cdot \rho}\right)^{2/5} + k \cdot d \qquad (2)$$

Für schlitzförmige Öffnungen kann eine von Nedderman modifizierte Gleichung für die Berechnung des Masseflusses verwendet werden:

$$\dot{M} = \frac{4\sqrt{2}\,C}{\Pi}\,\rho\,\sqrt{g}(L - kd)(B - kd)^{3/2} \qquad (3)$$

In dieser Gleichung (3) sind die Bedeutungen für $\dot{M}$, $\rho$, g, d, C und k identisch der Beverloo-Gleichung (1). L entspricht der Länge des Schlitzauslaufs in m und B der Breite des Schlitzauslaufs in m. Bei einer ringförmigen Öffnung entspricht L dem Umfang des mittleren Durchmessers des Ringspalts und B der Breite des Ringspalts. Entsprechend können Länge L und Breite B der ringförmigen Öffnung bei einer vorgegebenen Mindestabzugsleistung zumindest näherungsweise ermittelt werden.

Die Gleichungen von Beverloo (1) und Nedderman (3) sind in DOI: 10.1615/AtoZ.g.granular_materials_discharge_through_orifices von Nedderman, E.I. veröffentlicht.

Das Schüttgut kann durch die Restquerschnittsfläche aus dem Mischsilo im Massenfluss austreten. Im Mischsilo stellt sich eine Pfropfenströmung ein.

Das Mischsilo, das auch als Homogenisiersilo bezeichnet wird, ist insbesondere ein gravimetrischer Mischer in einer Anlage für die Kunststoffherstellung und/oder Kunststoffverarbeitung, die sogenannte Compoundierung, für Schüttgüter aus Pulver und/oder Granulat. Das Pulver weist eine mittlere Korngröße zwischen 50 μm und 2000 μm, insbesondere zwischen 150 μm und 1800 μm und insbesondere zwischen 300 μm und 1500 μm auf. Das Granulat weist eine mittlere Korngröße von 1500 μm bis 6000 μm, insbesondere von 1800 μm bis 5000 μm und insbesondere von 2000 μm bis 4000 μm auf.

Die Förderung der Schüttgüter in der Anlage erfolgt insbesondere mittels gravimetrischer und/oder pneumatischer Förderung. Kunststoffe sind insbesondere Polyolefine wie beispielsweise Polyethylen (PE) und/oder Polypropylen (PP) sowie technische Kunststoffe wie beispielsweise Polyamid (PA), Polycarbonat (PC), Acrylnitril-Butadien-Styrol-Copolymer (ABS) und/oder Polyethylenterephthalat (PET). Als Kunststoffe können auch PVC-Dryblend, Kunststoffmahlgut, Kunststoffregranulat sowie Recyclingprodukte aus Kunststoff verwendet werden.

Das Befüllen des Mischsilos, das auch als Zufördern bezeichnet wird, erfolgt insbesondere gravimetrisch und/oder mittels pneumatischer Förderung. Unter gravimetrischem Fördern wird verstanden, dass sich das Schüttgut in Folge der Schwerkraft, insbesondere selbsttätig, nach unten bewegt. Das Entleeren des Mischsilos, das auch als Abfördern bezeichnet wird, erfolgt insbesondere gravimetrisch, insbesondere in Behälter, Bigbags, Silotankwagen und/oder Railcars. Es ist alternativ denkbar, dass sich dem Mischsilo eine pneumatische Förderanlage anschließt, um das Schüttgut in nachgeordnete Behälter, insbesondere Silos, zu fördern.

Das Mischen in dem Mischsilo erfolgt insbesondere gravimetrisch, indem zumindest ein Teil des Schüttguts durch den mindestens einen Mischeinbau fließt. Der Teil des Schüttguts, der durch den mindestens einen Mischeinbau fließt, beträgt insbesondere zwischen 10 % und 90 % des Schüttguts, das durch das Mischsilo fließt. Insbesondere beträgt der Teil zwischen 15 % und 85 %, insbesondere zwischen 20 % und 80 % und insbesondere zwischen 25 % und 75 %.

Durch den mindestens einen Mischeinbau wird erreicht, dass Schüttgut aus verschiedenen Höhen des Mischsilos gleichzeitig abgezogen wird und in einem Auslaufbereich des Mischsilos aus den verschiedenen Höhen miteinander vermischt, also homogenisiert wird, um eine gleichmäßige Güte der Schüttgutqualität zu erreichen. Das Mischsilo wird insbesondere kontinuierlich betrieben. Durch den mindestens einen Mischeinbau wird das Schüttgut im Mischbetrieb nicht im Massenfluss im Sinne einer Pfropfenströmung aus dem Mischsilo abgezogen, sondern durch die Ausbildung von Fließzonen und/oder durch Öffnungen in Mischrohren kann das Schüttgut direkt von oben nach unten fließen. Dadurch kommt das Schüttgut aus den unterschiedlichen Höhen im Mischsilo gleichzeitig unten im Mischsilo an und wird dadurch miteinander vermischt. Beispielsweise kann dadurch zuletzt eingefülltes Schüttgut, das sich im Mischsilo ganz oben befindet, mit zuerst eingefülltem Schüttgut, das sich im Mischsilo ganz unten befindet, vereinigt werden, bevor es aus dem Mischsilo austritt.

Es kann vorgesehen sein, dass das aus dem Mischsilo ausfließende Schüttgut dem Mischsilo noch einmal oder noch mehrmals wieder zugeführt wird. Dazu kann das Schüttgut nach dem Ausfließen aus dem Mischsilo mittels einer pneumatischen Förderung über eine Rezirkulationsleitung dem Mischsilo von oben wieder zugeführt werden. Mittels einer sogenannten Rezirkulation oder Umwälzung wird die Mischqualität, also der Homogenisierungsgrad des Schüttguts, zusätzlich verbessert.

Bei der Kunststoffherstellung und/oder -verarbeitung werden Schüttgüter verschiedener Güteklassen, die auch als Grade bezeichnet werden, verwendet. Es ist auch möglich, unterschiedliche Schüttguttypen, also Schüttgüter unterschiedlicher chemischer und/oder physikalischer Eigenschaften, zu verwenden. Dies ist insbesondere in Verarbeiteranlagen, sogenannte Compoundieranlagen, oder Recyclinganlagen der Fall.

Als Verweilzeitverteilung ist die Zeitspanne definiert, innerhalb welcher Partikel, welche zu einem gegebenen Zeitpunkt ins Silo gelangen, das Silo sicher wieder durch den Auslauf verlassen haben. Bei dem erfindungsgemäßen Mischsilo ist die Verweilzeitverteilung im Durchflussbetrieb, also bei Massenfluss im Sinne einer Pfropfenströmung, wenn der mindestens eine Mischeinbau abgesperrt ist, sehr eng. Wenn mehrere Absperrelemente vorgesehen sind, kann es ausreichend sein, wenn mindestens ein Absperrelement sich im abgesperrten Zustand befindet, um den Durchflussbetrieb zu gewährleisten. Insbesondere sind sämtliche Absperrelemente im Durchflussbetrieb in abgesperrtem Zustand.

Durch das Verschließen des mindestens einen Mischeinbaus wird sichergestellt, dass das Mischsilo nach dem "first in - first out"-Prinzip betrieben wird. In dem Mischsilo bereits vorhandenes Schüttgut wird, insbesondere ohne Vermischung mit einem Übergangsprodukt, aus dem Mischsilo abgezogen. Dieses Schüttgut kann sortenrein zwischengelagert und für eine weitere Verwendung genutzt werden. Eine Aussonderung dieses Mischguts ist entbehrlich. Die Wirtschaftlichkeit der Anlage und des Verfahrens ist dadurch erhöht. Insbesondere erfolgt das Schließen des mindestens einen Absperrelements vor dem Wechsel einer Schüttguttype und/oder einer Schüttgutgüteklasse zu einer anderen Schüttguttypen bzw. einer anderen Schüttgutgüteklasse. Dadurch wird der Fluss des Schüttgutes in und/oder durch den mindestens einen Mischeinbau verhindert. Das Schüttgut fließt ausschließlich im Bereich, in dem keine Mischeinbauten vorhanden sind. Das Schüttgut fließt insbesondere gleichmäßig im Massenfluss im Sinne einer Pfropfenströmung. Das für die nächste Anwendung in das Mischsilo zugeförderte Mischgut wird von oben auf das sich bereits im Mischsilo befindende Schüttgut eingefüllt. Das neu eingefüllte Schüttgut bleibt oberhalb des bisher im Mischsilo vorhandenen Schüttguts. Eine Durchmischung der Schüttgüter ist verhindert.

Die Anmelderin hat ferner gefunden, dass durch das Absperren des mindestens einen Mischeinbaus die sogenannte Schüttkegelentmischung beim Entleeren des Mischsilos verhindert wird. Die Schüttkegelentmischung tritt insbesondere auf, wenn das Schüttgut ein Recyclingprodukt ist, das unterschiedliche Kornformen wie kompakt, faserförmig oder folienschnitzelartig, und/oder unterschiedliche Korngrößen in einem Bereich von 100 $\mu$m bis 10 mm aufweisen kann. Dadurch, dass bei abgesperrtem Mischeinbau das Schüttgut im Massenfluss im Sinne einer Pfropfenströmung durch das Mischsilo fließt, wird eine Entmischung verhindert.

Ein Mischsilo gemäß Anspruch 2 ist unkompliziert ausgeführt und begünstigt den gravimetrischen Betrieb.

Ein Mischsilo gemäß Anspruch 3 gewährleistet eine räumlich flexible Absperrung des Mischeinbaus. Es ist insbesondere denkbar, mehrere Absperrelemente an ein und demselben Mischeinbau vorzusehen, wobei die Absperrelemente an verschiedenen Positionen, insbesondere entlang der Längsachse, also an verschiedenen Höhenpositionen, angeordnet sein können. Das Absperrelement ist insbesondere in einem Auslaufbereich des Mischsilos angeordnet. Die Größe des Absperrelements kann dadurch klein ausgeführt sein. Zusätzlich oder alternativ ist es denkbar, das Absperrelement im Einlaufbereich des Mischsilos und/oder zwischen dem Einlaufbereich und dem Auslaufbereich des Mischsilos anzuordnen.

Ein Mischsilo gemäß Anspruch 4 weist verbesserte Mischeigenschaften auf.

Das Mischsilo kann als sogenannter Konusmischer bzw. Fließzonenmischer ausgeführt sein, bei dem das Schüttgut aus verschiedenen Höhen durch Bildung von Fließzonen, die sich in verschiedenen Höhen im Mischsilo ausbilden, gleichzeitig nach unten zum Auslauf gelangt. Der Konusmischer weist insbesondere mindestens einen Mischkonus auf.

Alternativ kann das Mischsilo als sogenannter Rohrmischer mit mindestens einem Mischrohr ausgeführt sein, bei dem das Schüttgut über mindestens eine Öffnung in das Mischrohr gelangt. Die Öffnung wird auch als Schlucköffnung bezeichnet. Insbesondere sind mehrere Mischrohre mit einer oder mehr Öffnungen vorgesehen, die sich in verschiedenen Höhen in dem Mischsilo befinden, wobei durch die Öffnungen das Schüttgut gleichzeitig zu dem Auslauf gelangt. Die Öffnungen können an einer äußeren Mantelwand des Mischrohrs und/oder stirnseitig an dem Mischrohr angeordnet sein. Das Mischrohr ist insbesondere als Zylinderrohr ausgeführt. Das Mischrohr kann aber auch eine unrunde Kontur, insbesondere eine ovale oder polygonale Kontur aufweisen.

Ein Mischsilo gemäß Anspruch 5 ist besonders kompakt und insbesondere kleinbauend ausgeführt.

Ein Mischsilo gemäß Anspruch 6 ermöglicht ein vereinfachtes Absperren des Mischeinbaus. Ein Absperrantrieb kann beispielsweise pneumatisch

oder elektrisch ausgeführt sein, um das Absperrelement angetrieben zu betätigen.

Vorteilhaft ist es, eine mechanische Verbindung zwischen dem Absperrelement und dem Absperrantrieb zu schaffen, so dass der Absperrantrieb insbesondere außerhalb des Mischsilos angeordnet ist und damit von außerhalb des Mischsilos zugänglich ist. Wartungs- und/oder Reparaturarbeiten an dem Absperrantrieb sind vereinfacht. Eine Beeinträchtigung des Antriebs durch unmittelbaren Kontakt mit dem Schüttgut ist vermieden. Die Lebenszeit des Absperrantriebs ist erhöht.

Es ist vorteilhaft, für das Absperrelement und/oder für den Absperrantrieb eine automatisierte Stellungsanzeige vorzusehen. Die Stellungsanzeige ist insbesondere als Endschalter ausgeführt. Die Stellungsanzeige zeigt an, ob sich das Absperrelement in der Offenstellung oder in der Schließstellung befindet. Es ist denkbar, dass nur ein Endschalter für eine der beiden Stellungen oder zwei Endschalter für beide Stellungen vorgesehen sind. Vorteilhaft ist es, wenn zumindest ein Endschalter für die Offenstellung vorgesehen ist. Dadurch kann sichergestellt werden, dass der Normalbetrieb des Mischsilos, also der Mischbetrieb, unmittelbar erkennbar ist.

Alternativ ist es möglich, das mindestens eine Absperrelement manuell zu verstellen. Der apparative Aufwand für das Mischsilo ist dadurch reduziert.

Ein Mischsilo gemäß Anspruch 7 ermöglicht einen automatisierten Betrieb des Mischsilos, insbesondere ein automatisiertes Umschalten von Mischbetrieb auf den Durchflussbetrieb und umgekehrt. Insbesondere ist ein vollautomatisierter und/oder geregelter Betrieb des Mischsilos möglich.

Eine Ausführung des Absperrelements als Klappenscheibe gemäß Anspruch 8 ist besonders unkompliziert und zuverlässig in der Anwendung. Die Klappenscheibe weist insbesondere mindestens eine unebene Seitenfläche auf. Dadurch wird das Risiko einer Produktablagerung reduziert und insbesondere verhindert. Die unebene Ausführung der Seitenfläche kann beispielsweise durch eine Abflachung mit einem Neigungswinkel zwischen 10° und 70°, insbesondere zwischen 15° und 45° und insbesondere zwischen 20° und 30° erreicht werden. Die Seitenfläche kann zusätzlich oder alternativ abgerundet, insbesondere mit kreisförmiger oder elliptischer Kontur, ausgeführt sein.

Alternativ kann das Absperrelement als Absperrklappe, Absperrschieber, Kugelhahn, Irisblende, als kegelförmiges Absperrelement, das insbesondere axial verstellbar ist, Quetschventil oder als verschiebbare Platte, die an das Mischsilo angepasst ist, ähnlich einem Absperrschieber, ausgeführt sein. Bei der Klappenscheibe oder der verschiebbaren Platte sind deren Größe und Form an die Kontur angepasst, die verschlossen werden soll, also die Kontur der Querschnittsfläche des Auslaufs des Mischeinbaus. Vorteilhaft ist es, wenn das Absperrelement möglichst wenige, insbesondere keine, Störkanten aufweist, die den Schüttgutfluss in der Offenstellung des Absperrelements beeinträchtigen könnten und/oder Bereiche erzeugt werden, in welchen das Schüttgut aufgestaut werden könnte. Das mindestens eine Absperrelement kann auch abgedichtet ausgeführt sein, insbesondere mit einer Dichtmanschette am Mischeinbau.

Für die Klappenscheibe und/oder die verschiebbare Platte ist es vorteilhaft, wenn ein verbleibender Spalt in der Schließstellung zwischen dem Absperrelement und der Querschnittsfläche des Mischeinbaus im Bereich des 0,3-fachen bis 20-fachen, insbesondere im Bereich des 0,4-fachen bis 10-fachen und insbesondere im Bereich des 0,5-fachen bis 5-fachen der mittleren Korngröße des zu fördernden Schüttguts liegt.

Eine Herstellungsanlage gemäß Anspruch 9 weist im Wesentlichen die Vorteile des Mischsilos auf, worauf hiermit verwiesen wird. In einem Herstellungsreaktor wird Schüttgut hergestellt und mittels einer Zufördereinheit in das Mischsilo zugefördert. Das Zufördern kann mittels einer pneumatischen Förderung und/oder gravimetrisch erfolgen. Es ist auch denkbar, dass eine Abfördereinheit vorgesehen ist, um Schüttgut aus dem Mischsilo abzufördern. Wenn das Abfördern rein gravimetrisch erfolgt, ist die Abfördereinheit insbesondere durch eine untere Auslauföffnung gebildet.

Eine Herstellungsanlage gemäß Anspruch 10 ermöglicht eine verbesserte Homogenisierung des Schüttguts.

Ein Verfahren gemäß Anspruch 11 weist im Wesentlichen die Vorteile des Mischsilos auf, worauf hiermit verwiesen wird. Durch das Absperren des mindestens einen Mischeinbaus wird ein Schüttgutstrom durch den Mischeinbau zuverlässig verhindert. Bei abgesperrtem Mischeinbau wird das Schüttgut aus dem Mischsilo insbesondere im Massenfluss im Sinne einer Pfropfenströmung abgefördert.

Bei einem Verfahren gemäß Anspruch 12 kann die Schüttgutmenge einer Übergangszeit zusätzlich reduziert werden. Die Übergangszeit ist der Zeitraum bei einem Produktwechsel, also einem Schüttgutwechsel, beispielsweise einer Schüttguttype und/oder einer Schüttgut-Klasse, der benötigt wird, um das Schüttgut der vorherigen Verwendung vollständig aus dem Mischsilo abzufördern. Dadurch, dass das Absperren des Mischeinbaus erfolgt, wenn ein Produktwechsel ansteht, insbesondere zu Beginn des Produktwechsels, ist eine unerwünschte Vermischung der unterschiedlichen Schüttgüter ausgeschlossen.

Ein Verfahren gemäß Anspruch 13 weist einen erhöhten Massestrom auf.

Ein Verfahren gemäß Anspruch 14 ermöglicht einen erleichterten Rückwechsel vom Durchflussbetrieb in den Mischbetrieb. Insbesondere erfolgt ein Wiederöffnen des mindestens einen Absperrelements nach einer veränderlich einstellbaren Wechselzeit. Die Wechselzeit entspricht der Übergangszeit. Die Übergangszeit kann insbesondere berechnet werden.

Ein Verfahren gemäß Anspruch 15 ermöglicht eine reduzierte maximale Verweilzeit des Schüttguts im Mischsilo. Die maximale Verweilzeit ist die obere Grenze der Verweilzeitverteilung. Insbesondere wird die Verweilzeit durch den abgesperrten Mischeinbau nicht oder nicht wesentlich verlängert gegenüber einem sonst identischen Silobehälter ohne Mischeinbau, wobei der Silobehälter nach dem "first-in - first-out"-Prinzip betrieben wird. Unter einem sonst identischen Silobehälter ohne Mischeinbau ist insbesondere ein Silobehälter zu verstehen, der das gleiche nutzbare Volumen des erfindungsgemäßen Silobehälters aufweist, aber ohne Mischeinbau ausgeführt ist. Insbesondere ist das nutzbare Volumen des sonst identischen Silobehälters um den Volumenanteil gegenüber dem Nettovolumen des erfindungsgemäßen Silobehälters reduziert, den der Mischeinbau selbst in dem erfindungsgemäßen Silobehälter verdrängt. Die maximale Verweilzeit beträgt insbesondere das 1,0-fache bis 1,4-fache der maximalen Verweilzeit des sonst identischen Silobehälters, insbesondere das 1,0-fache bis 1,2-fache und insbesondere das 1,0-fache bis 1,1-fache. Der sonst identische Silobehälter weist insbesondere eine identische Mindestabzugsleistung und eine identische Silo-Schüttgutmenge auf.

Sowohl die in den Patentansprüchen angegebenen Merkmale als auch die in den nachfolgenden Ausführungsbeispielen des erfindungsgemäßen Mischsilos angegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:

Fig. 1       eine schematische Darstellung einer Herstellungsanlage für Schüttgut mit einem Herstellungsreaktor und einem erfindungsgemäßen Mischsilo,

Fig. 2       eine schematische Längsschnittdarstellung durch das Mischsilo gemäß Fig. 1, das als Konusmischer ausgeführt ist,

Fig. 3       eine Fig. 2 entsprechende Darstellung eines Mischsilos gemäß einer weiteren Ausführungsform mit einer Klappenscheibe als Absperrelement, das im Auslaufbereich des Mischeinbaus angeordnet ist,

Fig. 4       eine vergrößerte Querschnittsdarstellung des Mischsilos gemäß Schnittlinie IV-IV in Fig. 3,

Fig. 5 bis 7   verschiedene Ausgestaltungen einer Seitenkante der Klappenscheibe in Fig. 4,

Fig. 8       eine Fig. 3 entsprechende Darstellung eines Mischsilos gemäß einer weiteren Ausführungsform, bei der das Absperrelement am unteren Ende des Auslauftopfes angeordnet ist,

Fig. 9       eine Fig. 3 entsprechende Darstellung eines Mischsilos in Form eines Rohrmischers mit Absperrelement im Auslaufbereich eines Sammeltopfes,

Fig. 10       eine Fig. 9 entsprechende Darstellung eines Rohrmischers gemäß einer weiteren Ausführungsform, bei dem Absperrelemente stromaufwärts des Sammeltopfes an den Mischrohren angeordnet sind,

Fig. 11       eine Fig. 9 entsprechende Darstellung eines Rohrmischers mit zentralem Mischrohr und mehreren Absperrelementen,

Fig. 12       eine Fig. 11 entsprechende Darstellung eines Rohrmischers mit zentralem Mischrohr, wobei die Absperrelemente am Einlauf des Mischrohrs angeordnet sind.

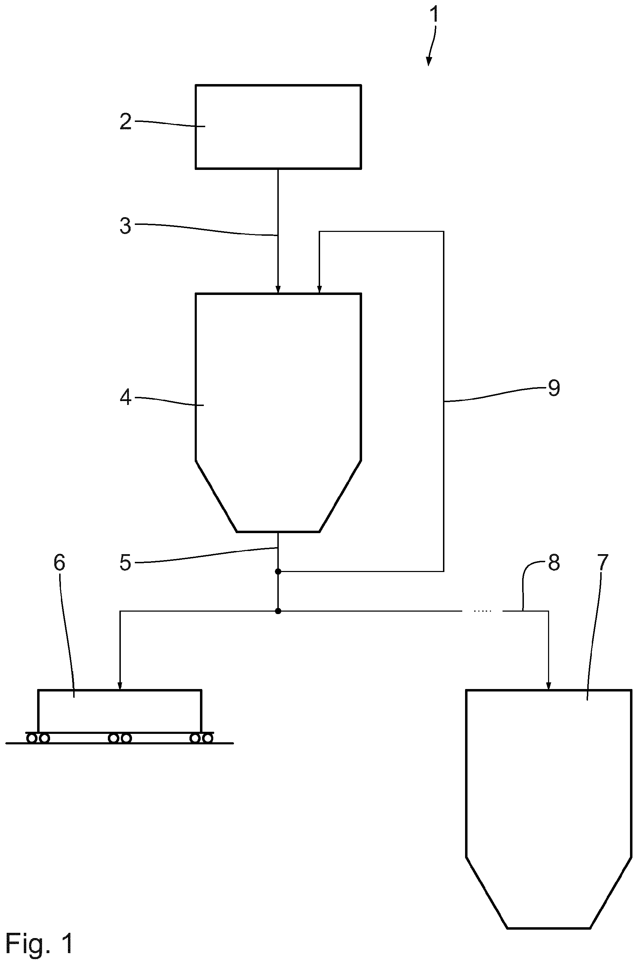

Eine in Fig. 1 dargestellte, als Ganzes mit 1 bezeichnete Herstellungsanlage dient zur Herstellung von Schüttgut, insbesondere von Kunststoffgranulat, insbesondere von Polyolefingranulat. Die Herstellungsanlage 1 umfasst einen Herstellungsreaktor 2, in dem Schüttgut hergestellt wird. Der Herstellungsreaktor 2 ist insbesondere ein Polymerisationsreaktor und/oder ein Extruder. Der Herstellungsreaktor 2 ist mittels einer Zufördereinheit 3 mit einem Mischsilo 4 verbunden. Die Zufördereinheit 3 dient zum Zufördern des Schüttguts in das Mischsilo 4. Das Zufördern kann insbesondere rein gravimetrisch erfolgen. Zusätzlich oder alternativ kann eine pneumatische Förderung genutzt werden. In diesem Fall ist die Zufördereinheit 3 als Teil einer pneumatischen Förderanlage ausgeführt.

In dem Mischsilo 4 wird das Schüttgut in einem Mischbetrieb gemischt und zur weiteren Verwendung abgefördert. Das Abfördern des Schüttguts aus dem Mischsilo 4 erfolgt mittels einer Abfördereinheit. Das Abfördern kann insbesondere rein gravimetrisch erfolgen, indem das Schüttgut beispielsweise in ein Transportbehältnis 6 abgegeben wird. In diesem Fall ist die Abfördereinheit 5 als Auslauföffnung des Mischsilos 4 gebildet. Zusätzlich oder alternativ kann ein Abfördern mittels einer pneumatischen Förderung in einen Speicherbehälter 7, insbesondere ein Silo, erfolgen. In diesem Fall ist die Abfördereinheit 5 als Teil einer pneumatischen Förderanlage 8 von dem Mischsilo 4 in den Speicherbehälter 7 gebildet. Im Bereich der Abfördereinheit 5 ist eine Rezirkulationseinheit 9 in Form einer Rezirkulationsleitung angeordnet. Die Rezirkulationseinheit 9 ermöglicht eine Rezirkulation von Schüttgut, das aus dem Mischsilo 4 abgefördert worden ist, zurück in das Mischsilo 4 im Bereich der Zufördereinheit 3. Dazu kann die Rezirkulationsleitung, wie in Fig. 1 dargestellt, separat von der Zufördereinheit 3 in eine obere Öffnung des Mischsilos 4 münden. Es ist auch möglich, dass die Rezirkulationsleitung an eine Förderleitung der Zufördereinheit 3 angeschlossen ist.

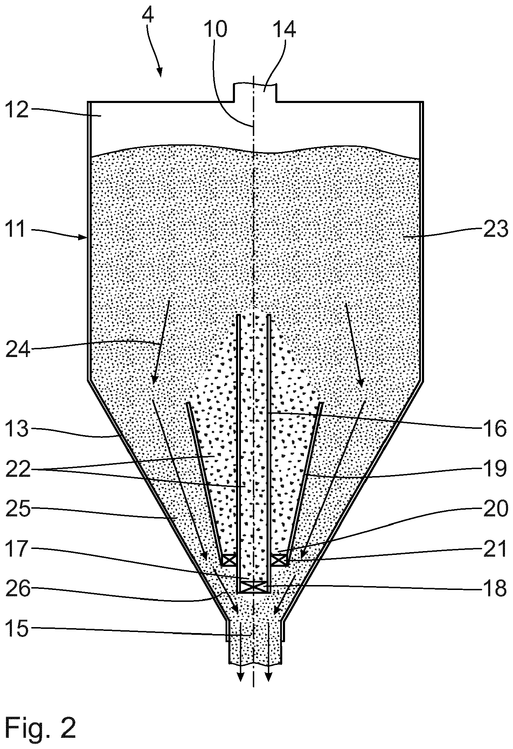

Nachfolgend wird anhand von Fig. 2 das Mischsilo 4 in Fig. 1 näher erläutert. Das Mischsilo 4 weist einen eine Längsachse 10 aufweisenden Silobehälter 11 auf. Der Silobehälter 11 umfasst einen zylindrischen Grundbehälter 12 und einen konischen Bodenabschnitt 13, der am unteren Ende des Grundbehälters 12 mit diesem verbunden ist. Der Silobehälter 11 weist eine obere, insbesondere zentrisch bezüglich der Längsachse 10 angeordnete, Zulauföffnung 14 und eine untere Ablauföffnung 15 auf. Die Querschnittsfläche der Ablauföffnung 15 entspricht der Querschnittsfläche des unteren Endes des konischen Bodenabschnitts 13. Die Ablauföffnung 15 ist am unteren Ende des Bodenabschnitts 13 angeordnet. Die Ablauföffnung 15 ist insbesondere konzentrisch zur Längsachse 10 angeordnet.

In dem Silobehälter 11 sind mehrere Mischeinbauten angeordnet, insbesondere in dem Silobehälter 11 fest verbaut. Ein erster Mischeinbau ist ein zentrales, konzentrisch zur Längsachse 10 angeordnetes Mischrohr 16. Das untere Ende des Mischrohrs 16 bildet den Mischrohr-Auslaufbereich 17, an dem ein Mischrohr-Absperrelement 18 angeordnet ist.

Ein weiterer Mischeinbau ist durch einen Mischkonus 19 gebildet, der insbesondere mehrere Fließzonen mit unterschiedlicher Fließgeschwindigkeit aufweist. Der Mischkonus 19 verjüngt sich entlang der Längsachse 10 zu der Ablauföffnung 15 hin. Der Mischkonus 19 kann in Umfangsrichtung bezüglich der Längsachse 10 mehrere Sektoren aufweisen, die durch Trennbleche voneinander abgetrennt werden. Die Trennbleche sind insbesondere vertikal und radial bezogen zur Längsachse 10 orientiert. Das Mischsilo 4 gemäß Fig. 2 wird auch als Konusmischer bezeichnet.

Der Mischkonus 19 weist an seinem unteren Ende einen Konus-Auslaufbereich 20 auf, an dem ein Mischkonus-Absperrelement 21 angeordnet ist.

Entlang der Längsachse 10 sind die Mischeinbauten 16, 19, also das Mischrohr 16 und der Mischkonus 19, zumindest bereichsweise überlappend angeordnet. Das bedeutet, dass der Mischkonus 19 um das zentral angeordnete Mischrohr 16 herum angeordnet ist.

Die Absperrelemente 18, 21 sind zwischen einer in Fig. 2 gezeigten Schließstellung und einer Offenstellung verlagerbar. In der gezeigten Schließstellung sind die Mischeinbauten 16, 19 verschlossen. Ein Schüttgutstrom durch die Mischeinbauten 16, 19 ist verhindert.

In der Offenstellung ist ein Schüttgutstrom durch die Mischeinbauten 16, 19 möglich.

Die Absperrelemente 18, 21 sind insbesondere unabhängig voneinander betätigbar.

In axialer Richtung bezüglich der Längsachse 10 steht das Mischrohr 16 mit dem Auslaufbereich 17 nach unten an dem Mischkonus 19 vor. Der Auslaufbereich 17 des Mischrohrs 16 ist näher der Ablauföffnung 15 angeordnet als der Auslaufbereich 20 des Mischkonus 19.

Nachfolgend wird ein Verfahren für den Betrieb des Mischsilos 4 bei einem Produktwechsel in der Herstellungsanlage 1 anhand von Fig. 1 und 2 näher erläutert.

Bei einem Produktwechsel, insbesondere einem Wechsel der Schüttgut-Type und/oder der Schüttgut-Güteklasse, wird der Herstellungsreaktor 2 auf die neue Schüttguttype und/oder die neue Schüttgut-Güteklasse umgestellt. Diese Umstellung dauert typischerweise mindestens eine Stunde, insbesondere mehrere Stunden. Bei der Herstellung von Kunststoffgranulat, insbesondere Polyolefin-Granulat, wird das Mischsilo kontinuierlich betrieben. Im Standardbetrieb befindet sich das Mischsilo 4 in einem Mischbetrieb, in dem Schüttgut im Mischsilo 4 in die Mischeinbauten 16, 19 gelangen kann und aufgrund der unterschiedlichen Fließgeschwindigkeiten eine breite Verweilzeitverteilung erzielt wird. Die Absperrelemente 18, 21 werden in die Schließstellung verlagert und dadurch die Mischeinbauten 16, 19 verschlossen. Im Bereich der geschlossenen Mischeinbauten 16, 19 bildet sich ein Staubereich 22 aus, in dem das Schüttgut steht, also nicht fließt. Außerhalb des Staubereichs 22 bildet sich ein Fließbereich 23 aus, in dem das Schüttgut im Massenfluss, also nach dem "first-in - first-out"-Prinzip, gravimetrisch durch das Mischsilo 4 fließt. Die Strömungsrichtung 24 des strömenden Schüttguts ist in Fig. 2 symbolisch gekennzeichnet. Das Schüttgut strömt in einem äußeren Randbereich 25 um die zentrisch angeordneten Mischeinbauten 16, 19 herum nach unten. In radialer Richtung bezüglich der Längsachse 10 ist der Randbereich 25 an seiner Außenseite durch den Bodenabschnitt 13 und an seiner Innenseite durch den Mischkonus 19 begrenzt.

Das Mischsilo 4 weist eine minimale Restquerschnittsfläche 26 auf, die gemäß dem gezeigten Ausführungsbeispiel ringförmig ausgeführt ist. Die Restquerschnittsfläche 26 ist in einer Ebene senkrecht zur Längsachse 10 orientiert.

Die Restquerschnittsfläche 26 repräsentiert den Randbereich 25 an einer Axialposition des Absperrelements 18, das am nächsten zu der Ablauföffnung 15 angeordnet ist.

Die Restquerschnittsfläche 26 ist so groß, dass ein Massestrom des Schüttguts gewährleistet ist, der größer oder gleich der Mindestabzugsleistung des Mischsilos 4 ist. Dadurch ist gewährleistet, dass der Massestrom im Durchflussbetrieb durch das Mischsilo 4 keine Limitierung der Prozessleistung der Herstellungsanlage 1 bewirkt.

Ein anschließendes Öffnen der Absperrelemente 18, 21 erfolgt nach Ablauf einer errechneten Übergangszeit des Mischsilos 4.

Die Übergangszeit im Mischsilo 4 wird auch als Verweilzeit bezeichnet. Die Verweilzeit ist die Zeit, die benötigt wird, bis im Mischsilo 4 selbst der Produktwechsel vollzogen ist, sich im Mischsilo 4 also kein Produkt mehr befindet, das vor dem Wechsel im Mischsilo 4 war, sondern nur noch Produkt, welches nach dem Wechsel zur Verfügung stehen soll.

Insbesondere werden die Absperrelemente 18, 21 geschlossen, bevor der Produktwechsel beginnt. Das Schüttgut fließt ausschließlich entlang des Strömungsbereichs 23, also dort, wo keine Mischeinbauten 16, 19 vorhanden sind. Das Schüttgut fließt gleichmäßig im Massenfluss im Sinne einer Pfropfenströmung. Das einzustellende Produkt, das über die Zulauföffnung 14 in das Mischsilo 4 gelangt, sinkt mit gleichmäßiger Geschwindigkeit im Mischsilo 4 über die Querschnittsfläche nach unten, also ohne eine Verweilzeitverteilung zu erzeugen. Eine Vermischung von neuem Produkt mit altem Produkt ist verhindert. Das Öffnen der Absperrelemente erfolgt nach Ablauf der Verweilzeit des Schüttguts im Mischsilo 4. Nach Ablauf der Verweilzeit ist davon auszugehen, dass kein Produkt des zuvor im Mischsilo 4 befindenden Produkts mehr vorhanden ist. Insbesondere kann der Zeitbedarf bei einem Produktwechsel sehr kurz und insbesondere nahezu übergangslos gestaltet werden.

Produkt, welches sich zum Zeitpunkt des Absperrens der Mischeinbauten 16, 19 in den Mischeinbauten 16, 19 befindet, kann durch Öffnen, der Absperrelemente 18, 21 mit dem letzten Übergangsprodukt aus dem Mischsilo 4 entleert werden.

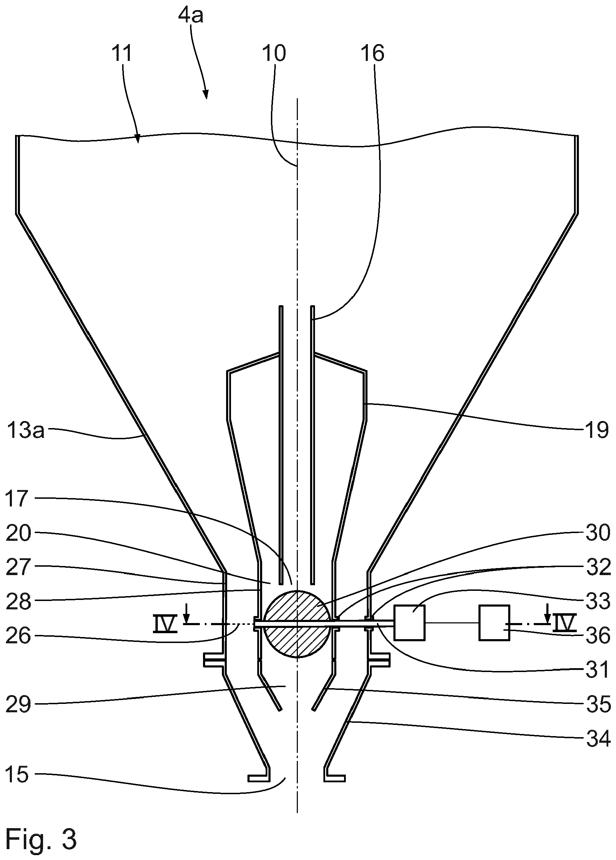

Im Folgenden wird unter Bezugnahme auf Fig. 3 bis 7 eine weitere Ausführungsform der Erfindung beschrieben. Konstruktiv identische Teile erhalten dieselben Bezugzeichen wie bei der vorherigen Ausführungsform, auf deren Beschreibung hiermit verwiesen wird. Konstruktiv unterschiedliche, jedoch funktionell gleichartige Teile erhalten dieselben Bezugzeichen mit einem nachgestellten a.

Bei dem Mischsilo 4a, das auch als Konusmischer ausgeführt ist, ist an dem Bodenabschnitt 13a an seinem unteren Ende ein zylindrischer Verlängerungsabschnitt 27 angeformt. Der Verlängerungsabschnitt 27 bildet einen Mischsilo-Auslaufbereich. An dem unteren Ende des Mischsilo-Auslaufbereichs 27 ist ein Endkonus 34 angeflanscht.

In dem Mischsilo-Auslaufbereich 27 ist eine zylindrische Verlängerung 28 unterhalb der Mischeinbauten 16, 19 angeordnet und damit verbunden. Die zylindrische Verlängerung 28 ist rohrförmig ausgeführt. Die Verlängerung 28 wird auch als Auslauftopf oder als Sammeltopf bezeichnet. An dem Sammeltopf 28 ist ein Konusendstück 35 angebracht. Die Auslaufbereiche 17 und 20 der Mischeinbauten 16 und 19 münden in die zylindrische Verlängerung 28, die an ihrem unteren, den Mischeinbauten 16, 19 gegenüberliegenden Ende einen Verlängerungs-Auslauf 29 aufweist. Der Verlängerungs-Auslauf 29 bildet einen gemeinsamen Auslaufbereich für die Mischeinbauten 16, 19 gemäß dem gezeigten Ausführungsbeispiel.

In der Verlängerung 28 ist ein, insbesondere einziges, Absperrelement 30 angeordnet. Das Absperrelement 30 ist als Klappenscheibe ausgeführt, die in Fig. 3 in der Offenstellung dargestellt ist. Das Absperrelement 30 ist axial bezüglich der Längsachse 10 beabstandet zu dem Auslaufbereich 17 des Mischrohrs 16 angeordnet, so dass eine kollisionsfreie Drehung der Klappenscheibe möglich ist. Die Klappenscheibe 30 ist an einer Klappenscheibenwelle 31 befestigt. Die Klappenscheibenwelle 31 verläuft senkrecht zur Längsachse 10 und ist seitlich aus dem Mischsilo 4a herausgeführt. Dazu sind an der Verlängerung 28 und an dem Mischsilo-Auslaufbereich 27 entsprechende Lager 32 vorgesehen.

Die Klappenscheibenwelle 31 ist mit ihrem der Klappenscheibe 30 abgewandten Ende mit einem Absperrantrieb 33 verbunden. Der Absperrantrieb 33 ist insbesondere ein Elektromotor. Mittels des Absperrantriebs 33 kann die Klappenscheibenwelle 31 und damit die Klappenscheibe 30 gedreht werden. Eine Verlagerung von der in Fig. 3 gezeigten Offenstellung in die Schließstellung erfolgt durch eine 90°-Drehung um die Klappenscheibenwelle 31.

Der Absperrantrieb ist mit einer Steuerungseinheit 36 in Signalverbindung. Die Signalverbindung kann, wie in Fig. 3 angedeutet, kabelgebunden erfolgen. Die Signalverbindung zwischen dem Absperrantrieb 33 und der Steuerungseinheit 36 kann auch kabellos erfolgen.

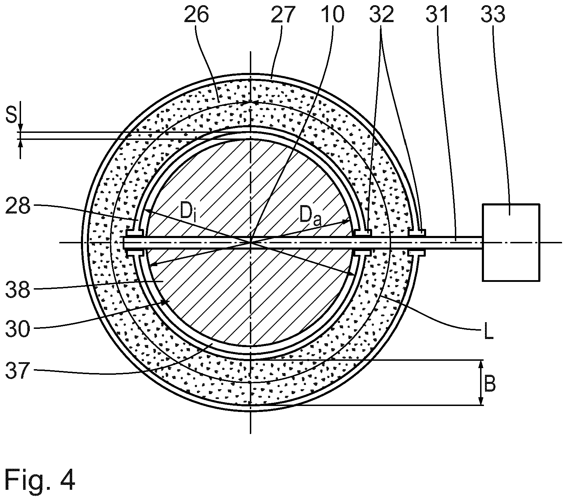

Nachfolgend wird die Ausgestaltung der Klappenscheibe 30 anhand von Fig. 4 näher erläutert. Fig. 4 zeigt die Klappenscheibe 30 in der Schließstellung.

Die Klappenscheibe 30 ist an die Verlängerung 28 angepasst. Insbesondere ist der Außendurchmesser $D_a$ der Klappenscheibe 30 an die Verlängerung 28 angepasst. Insbesondere ist die Klappenscheibe 30 derart an die Verlängerung 28 angepasst, dass zwischen dem Außendurchmesser $D_a$ der Klappenscheibe 30 und dem Innendurchmesser $D_i$ der Verlängerung 28 ein Ringspalt 37 mit einer Spaltbreite S resultiert. Vorteilhaft ist es, wenn der Ringspalt 37 eine Spaltbreite S aufweist, die dem 0,3-fachen bis 20-fachen, insbesondere dem 0,4-fachen bis 10-fachen und insbesondere dem 0,5-fachen bis 5-fachen der mittleren Korngröße des Schüttguts beträgt.

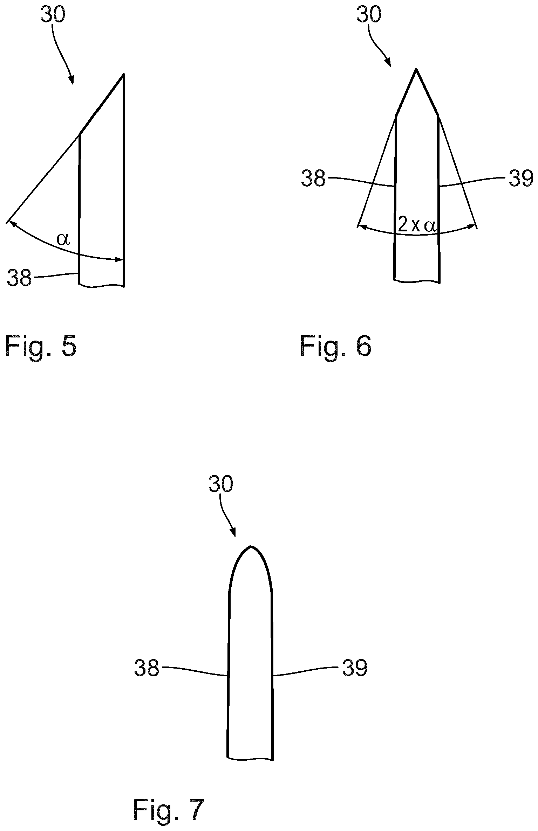

Die Klappenscheibe 30 ist im Wesentlichen als Zylinderscheibe ausgeführt mit einer oberen Seitenfläche 38, die in der Schließstellung gemäß Fig. 4 den Auslaufbereichen 17, 20 der Mischeinbauten 16, 19 zugewandt ist. Es ist vorteilhaft, wenn die obere Seitenfläche 38 in einem äußeren Kantenbereich eine Abflachung mit einem Winkel $\alpha$ aufweist. Die Abflachung kann sich entlang des gesamten Umfangs der Klappenscheibe 30 oder zumindest bereichsweise entlang des Umfangs der Klappenscheiben 30 erstrecken. Entlang des Umfangs können mehrere, voneinander getrennte Bereiche einer Abflachung vorgesehen sein. Der Winkel $\alpha$ liegt insbesondere zwischen 10° und 70°, insbesondere zwischen 15° und 45° und insbesondere zwischen 20° und 30°. Eine entsprechende Ausgestaltung der Klappenscheibe ist in Fig. 5 gezeigt.

Es ist alternativ denkbar, dass auch eine der oberen Seitenfläche 38 gegenüberliegende untere Seitenfläche 39 eine entsprechende Abflachung aufweist. Die Abflachungen an der oberen Seitenfläche 38 und der unteren Seitenfläche 39 können auch mit unterschiedlichen Winkeln ausgeführt sein. Eine beidseitig abgeflachte Klappenscheibe 30 ist in Fig. 6 dargestellt.

Fig. 7 zeigt eine Klappenscheibe 30, bei der die Seitenflächen 38, 39 im äußeren Kantenbereich abgerundet sind. Die Abrundung kann, wie in Fig. 7 dargestellt, elliptisch ausgeführt sein. Alternativ ist auch eine kreisförmige oder anders geformte Abrundung möglich.

Die ringförmige Restquerschnittsfläche 26 ist so dimensioniert, dass das Schüttgut im Massenfluss durch das Mischsilo 4a der abgesperrten Mischeinbauten 16, 19 fließen kann. Insbesondere ist die Restquerschnittsfläche 26 so groß, dass ein Massestrom des Schüttguts gewährleistet ist, der größer oder gleich der Mindestabzugsleistung des Mischsilos 4a ist, insbesondere mindestens das Doppelte, insbesondere mindestens das 3-fache, insbesondere mindestens das 5-fache, insbesondere mindestens das 10-fache und insbesondere höchstens das 20-fache der Mindestabzugsleistung beträgt.

Nachfolgend wird der Betrieb des Mischsilos 4a näher erläutert. Zunächst arbeitet das Mischsilo 4a in einem Standardbetrieb, also in einem Mischbetrieb. Wenn ein Produktwechsel beginnt, verlässt Produkt den Extruder, das (noch) nicht die Produkteigenschaft aufweist, die einzustellen ist. In dem Mischsilo 4a werden die Mischeinbauten 16, 19 mittels der Klappenscheibe 30 abgesperrt, indem die Klappenscheibe 30 von der in Fig. 3 gezeigten Offenstellung in die in Fig. 4 gezeigte Schließstellung verlagert wird. Das Mischsilo 4a arbeitet im Massenfluss nach dem "first in - first out"-Prinzip. Das nun aus dem Mischsilo 4a noch abgeförderte Produkt ist sogenanntes "altes" Produkt und kann einem entsprechenden Speicherbehälter zugeführt werden. Das in Folge des Produktwechsels erzeugte Übergangsprodukt kann aus dem Mischsilo 4a in einen separaten Speicherbehälter abgefördert werden. Sobald der Produktwechsel abgeschlossen ist und sämtliches Übergangsprodukt aus dem Mischsilo 4a abgefördert worden ist, wird das Mischsilo 4a aus dem Durchflussbetrieb mit Massenstrom in den Mischbetrieb zurück überführt, indem die Klappenscheibe 30 in die Offenstellung verlagert wird. Zunächst wird ein Mischprodukt aus dem Mischsilo 4a abgeführt, das eine Mischung aus "neuem" Produkt und dem in den Mischeinbauten 16, 19 gespeicherten "alten" Produkt ist. Dieses Mischprodukt kann ebenfalls in den separaten Speicherbehälter für das Übergangsprodukt abgeführt werden. Es ist auch denkbar, einen zusätzlichen Speicherbehälter für dieses Mischprodukt vorzusehen.

Wenn das Mischprodukt vollständig aus dem Mischsilo 4a abgefördert worden ist, befindet sich ausschließlich "neues" Produkt im Mischsilo 4a.

Das "neue" Produkt wird in dem Mischsilo 4a gemischt und kann in einen dafür vorgesehenen Speicherbehälter abgefördert werden.

Dadurch, dass der Absperrantrieb 33 an die Steuerungseinheit 36 angeschlossen ist, kann der Ablauf, also der Wechsel zwischen dem Mischbetrieb und dem Durchflussbetrieb, des Mischsilos 4a gesteuert und insbesondere geregelt erfolgen. Insbesondere ist die Steuereinheit 36 mit dem Herstellungsreaktor 2, insbesondere mit einem Extruder, in Signalverbindung, wobei ein Stellsignal von dem Extruder an die Steuerungseinheit immer dann übermittelt wird, wenn die Produktion des "alten" Produkts und/oder des Übergangsprodukts abgeschlossen ist.

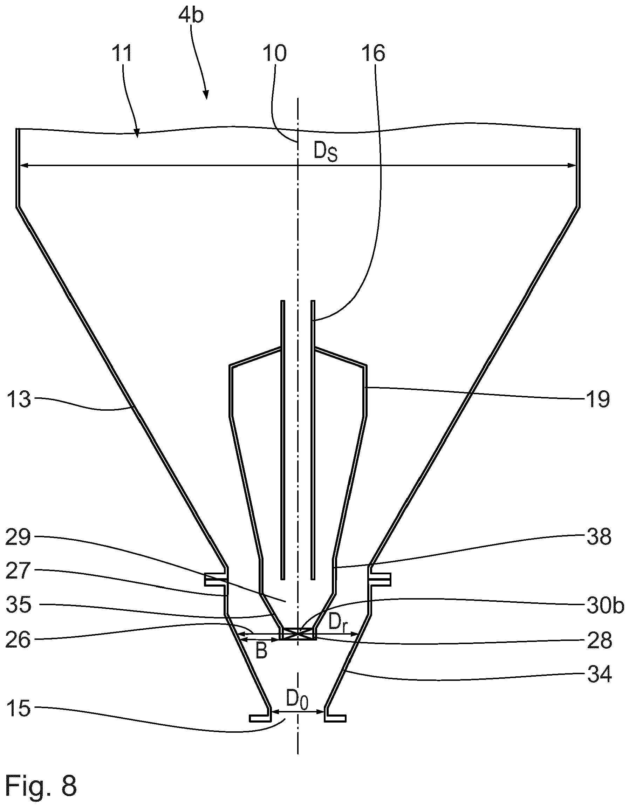

Nachfolgend wird anhand von Fig. 8 eine weitere Ausführungsform der Erfindung beschrieben. Konstruktiv identische Teile erhalten dieselben Bezugszeichen wie bei den vorherigen Ausführungsformen, auf deren Beschreibung hiermit verwiesen wird. Konstruktiv unterschiedliche, jedoch funktionell gleichartige Teile erhalten dieselben Bezugszeichen mit einem nachgestellten b.

Das Mischsilo 4b entspricht im Wesentlichen der vorherigen Ausführungsform in Fig. 3. Ein Unterschied besteht darin, dass das Absperrelement 30b am unteren Ende der Verlängerung 28 mit dem Konusendstück 35 angeordnet ist. Das Absperrelement 30b ist rein schematisch dargestellt. Das Absperrelement 30b kann als Klappenscheibe ausgeführt sein.

Das Mischsilo 4b weist an der Ablauföffnung 15 einen Ablaufdurchmesser $D_0$ auf. Die ringförmige Restquerschnittsfläche 26 weist eine Ringspaltbreite B auf, die der Differenz des Innendurchmessers $D_r$ des Mischsilo-Auslaufbereichs 27 in der Ebene der Restquerschnittsfläche 26 und des Außendurchmessers der Verlängerung 28 mit Konusendstück 35 in diesem Bereich entspricht. Als mittlere Ringspaltlänge L wird der mittlere Umfang der ringförmigen Restquerschnittsfläche 26 verstanden.

Der Grundbehälter 12 weist einen Innendurchmesser $D_S$ von 4,2 m auf. Das Mischsilo 4b weist ein Nettovolumen von 130 $m^3$ auf. Die Mindestabzugsleistung für das Mischsilo 4b ist mit 80 t/h Polyolefin-Pellets festgelegt. Die Polyolefin-Pellets weisen eine Schüttgutdichte von 550 kg/$m^3$ und einen Partikeldurchmesser von 3,5 mm auf. Entsprechend ergibt sich ein empirischer Austragskoeffizient C = 0,58 und der empirische Partikelkoeffizient k = 1,6.

Die weiteren geometrischen Daten des Mischsilos 4b sind:
r = 0,545 m, $D_0$ = 0,31 m, B = 0,0454 m und L = 1,566 m.

Gemäß der Beverloo-Gleichung (1) ergibt sich für das Mischsilo 4b ein maximaler Massestrom durch den Ablaufdurchmesser $D_0$ von 184 t/h, der größer ist als die Mindestabzugsleistung, so dass sich keine Limitierung für das Mischsilo 4b ergibt, wenn die Mischeinbauten 16, 19 geöffnet sind.

Wenn die Mischeinbauten 16, 19 durch das Absperrelement 30b abgesperrt sind und das Schüttgut ausschließlich über die Restquerschnittsfläche fließt, ergibt sich ein Massestrom über die Restquerschnittsfläche 26 gemäß der Gleichung von Nedderman von 80,3 t/h.

Das Mischsilo 4b mit den genannten geometrischen Daten ermöglicht über die Restquerschnittsfläche 26 einen Massestrom, der größer ist als die Mindestabzugsleistung.

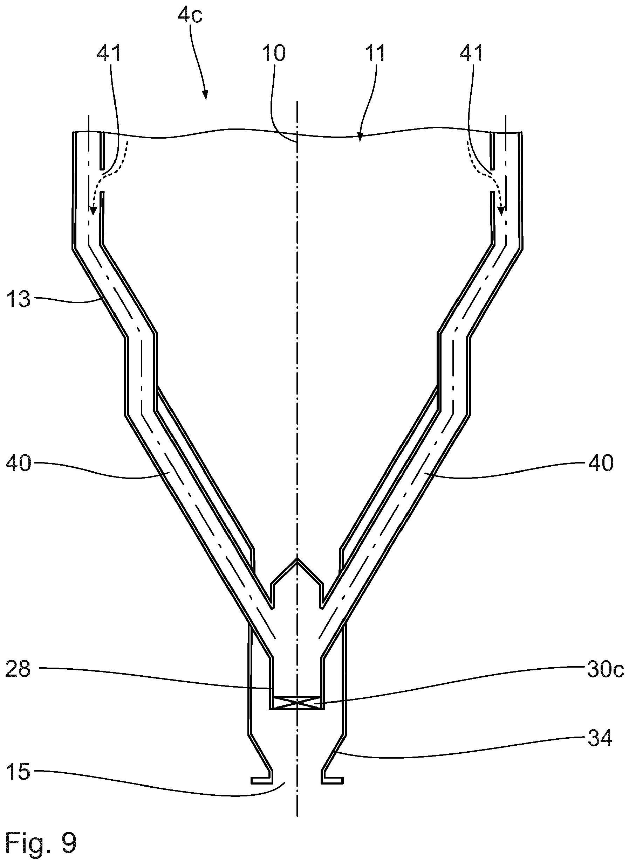

Im Folgenden wird unter Bezugnahme auf Fig. 9 eine weitere Ausführungsform der Erfindung beschrieben. Konstruktiv identische Teile erhalten dieselben Bezugszeichen wie bei den vorherigen Ausführungsformen, auf deren Beschreibung hiermit verwiesen wird. Konstruktiv unterschiedliche, jedoch funktionell gleichartige Teile erhalten dieselben Bezugszeichen mit einem nachgestellten c.

Das Mischsilo 4c ist als sogenannter Rohrmischer ausgeführt. Gemäß dem gezeigten Ausführungsbeispiel weist der Rohrmischer zwei Mischrohre 40 auf, die jeweils einen Mischeinbau darstellen. Die Mischrohre 40 sind insbesondere an der Innenwand des Silobehälters 11 angeordnet und insbesondere daran befestigt. Die Mischrohre 40 sind bezüglich der Längsachse 10 diametral gegenüberliegend angeordnet. Es können auch weniger oder mehr als zwei Mischrohre 40 vorgesehen sein. Die Anordnung der Mischrohre 40 zueinander, insbesondere eine Beabstandung der Mischrohre 40 in Umfangsrichtung um die Längsachse 10, kann unterschiedlich gewählt sein.

Die Mischrohre 40 münden in den Sammeltopf 28. Am unteren Ende des Sammeltopfes ist das Absperrelement 30c angeordnet, das insbesondere als angepasste Klappenscheibe ausgeführt sein kann. Gemäß dem gezeigten Ausführungsbeispiel ist der Sammeltopf 28 zylindrisch ausgeführt. Es ist denkbar, den Auslauf des Sammeltopfes 28 konisch zu verjüngen, um insbesondere das Absperrelement 30c kleinbauend ausführen zu können.

Die Mischrohre 40 weisen jeweils mindestens eine seitliche Öffnung 41 auf, die dem Innenraum des Silobehälters 11 zugewandt ist. Über die Öffnungen 41 kann Schüttgut aus dem Silobehälter 11, insbesondere dem Grundbehälter 12, in ein Mischrohr 40 gelangen. Gemäß dem gezeigten Ausführungsbeispiel sind die Öffnungen 41 in den Mischrohren 40 jeweils auf gleicher Höhe, also an der gleichen Axialposition bezüglich der Längsachse 10 angeordnet. Es ist denkbar, dass die Öffnungen 41 an verschiedenen Axialpositionen bezüglich der Längsachse 10 angeordnet sind. Es ist insbesondere denkbar, dass an einem Mischrohr 40 mehrere Öffnungen 41 vorgesehen sind. Mehrere Öffnungen 41 an einem Mischrohr 40 können bezüglich der Axialposition der Längsachse 10 verschieden an dem Mischrohr 40 angeordnet sein. Es ist auch denkbar, dass mehrere Öffnungen 41 an dem Mischrohr 40 auf gleicher Höhe bezüglich der Längsachse 10, aber an verschiedenen Umfangspositionen des Mischrohrs 40 angeordnet sind.

Die Mischrohre 40 weisen jeweils einen kreisförmigen Querschnitt auf. Andere Querschnittsformen sind möglich.

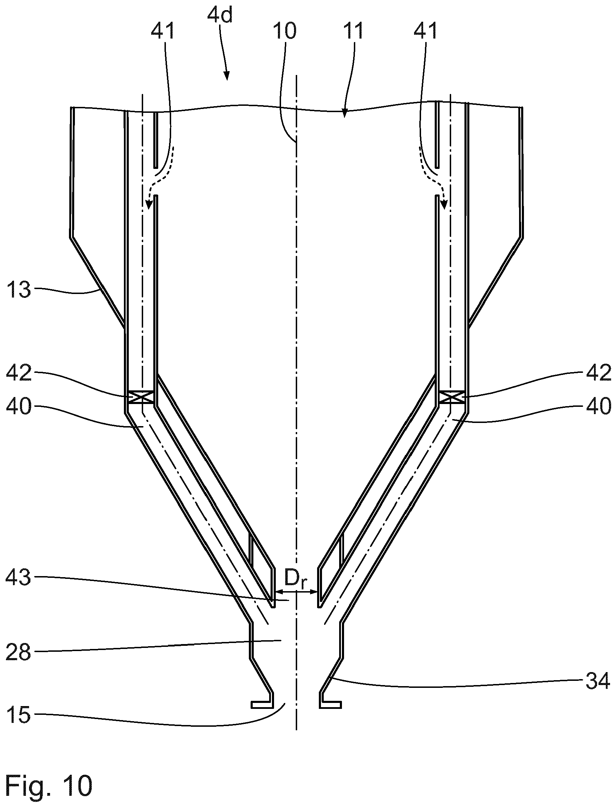

Im Folgenden wird unter Bezugnahme auf Fig. 10 eine weitere Ausführungsform der Erfindung beschrieben. Konstruktiv identische Teile erhalten dieselben Bezugszeichen wie bei den vorherigen Ausführungsformen, auf deren Beschreibung hiermit verwiesen wird. Konstruktiv unterschiedliche, jedoch funktionell gleichartige Teile erhalten dieselben Bezugszeichen mit einem nachgestellten d.

Das Mischsilo 4d ist ein Rohrmischer. Die Mischrohre 40 verlaufen teilweise innerhalb und teilweise außerhalb des Silobehälters 11.

Ein Unterschied gegenüber der vorherigen Ausführungsform besteht darin, dass Absperrelemente 42 jeweils innerhalb des Mischrohres 40 angeordnet sind. Die Absperrelemente 42 sind jeweils stromaufwärts des Sammeltopfes 28 angeordnet. Eine derartige Anordnung der Absperrelemente 42 ist bei dem gezeigten Ausführungsbeispiel vorteilhaft, da auch der Konusauslauf 43 des Bodenabschnitts 13 in den Sammeltopf 28 mündet. Dadurch ist sichergestellt, dass bei abgesperrten Mischrohren 40 der Mischbetrieb abgeschaltet ist und ein gleichmäßiger Austrag im Massenfluss aus dem Mischsilo 4d erhalten bleibt, da der Konusauslauf 43 frei ist, also nicht abgesperrt wird.

Für die Auslegung des Mischsilos 4d, insbesondere für die Größe des Ablaufdurchmessers $D_r$, kann die umgestellte Beverloo-Gleichung (1) genutzt werden. Die Daten für das Mischsilo 4d sind gemäß dem gezeigten Ausführungsbeispiel:
$\dot{M}$ = 80 t/h, C = 0,58, $\rho$ = 550 kg/$m^3$, k = 1,6, d = 3,5 mm.

Entsprechend ergibt sich eine Mindestgröße für den Ablaufdurchmesser von 0,224 m, so dass der Massenstrom im Durchflussbetrieb größer oder gleich der Mindestabzugsleistung ist.

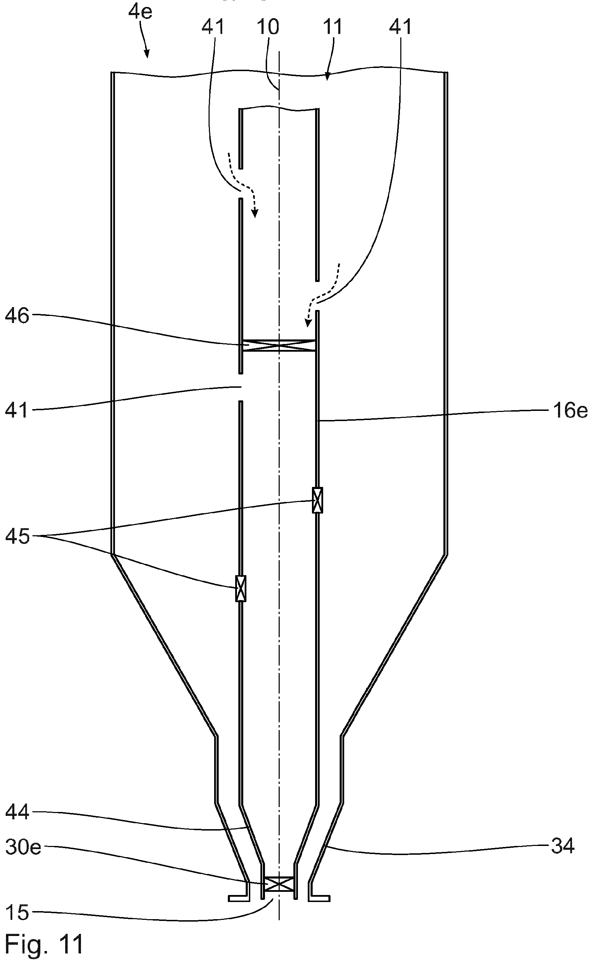

Im Folgenden wird unter Bezugnahme auf Fig. 11 eine weitere Ausführungsform der Erfindung beschrieben.

Konstruktiv identische Teile erhalten dieselben Bezugszeichen wie bei den vorherigen Ausführungsformen, auf deren Beschreibung hiermit verwiesen wird. Konstruktiv unterschiedliche, jedoch funktionell gleichartige Teile erhalten dieselben Bezugszeichen mit einem nachgestellten e.

Das Mischsilo 4e ist als Rohrmischer mit einem zentralen Mischrohr 16e ausgeführt.

Das Absperrelement 30e ist am unteren Ende des Mischrohrs 16e angeordnet. An dem unteren Ende weist das Mischrohr 16e ein konusförmiges Endstück 44 auf. Insbesondere ist das Absperrelement 30e am Ende des konusförmigen Endstücks 44 angeordnet. Das zentrale Mischrohr 16e ragt in den konisch verjüngten Auslaufbereich 34 des Mischsilos 4e hinein. Insbesondere ist das Absperrelement 30e an der unteren Ablauföffnung 15 des Mischsilos 4e angeordnet.

An dem Mischrohr 16e sind mehrere Öffnungen 41 angeordnet, die insbesondere an verschiedenen Positionen in axialer Richtung und in Umfangsrichtung bezüglich der Längsachse 10 angeordnet sind. Es ist optional möglich, zumindest eine der Öffnungen 41 mit einem zusätzlichen Absperrelement 45 zu verschließen, um zu verhindern, dass Schüttgut aus dem Silobehälter 11 in das Mischrohr 16 gelangt. Es ist auch denkbar, sämtliche Öffnungen 41 mit Absperrelementen 45 zu versehen. In diesem Fall ist es denkbar, auf das untere Absperrelement 30e zu verzichten.

Gemäß dem gezeigten Ausführungsbeispiel ist ein weiteres Absperrelement 46 in dem Mischrohr 16e vorgesehen, das stromaufwärts bezüglich des Absperrelements 30e angeordnet ist. Das Absperrelement 46 dient insbesondere zur Verhinderung eines Schüttgutstroms in dem Mischrohr 16e durch die oberhalb des Absperrelements 46 angeordneten Öffnungen 41. Insbesondere ermöglichen die Absperrelemente 45, 46 eine Beeinflussung des Mischverhaltens des Mischsilos 4e im Mischbetrieb.

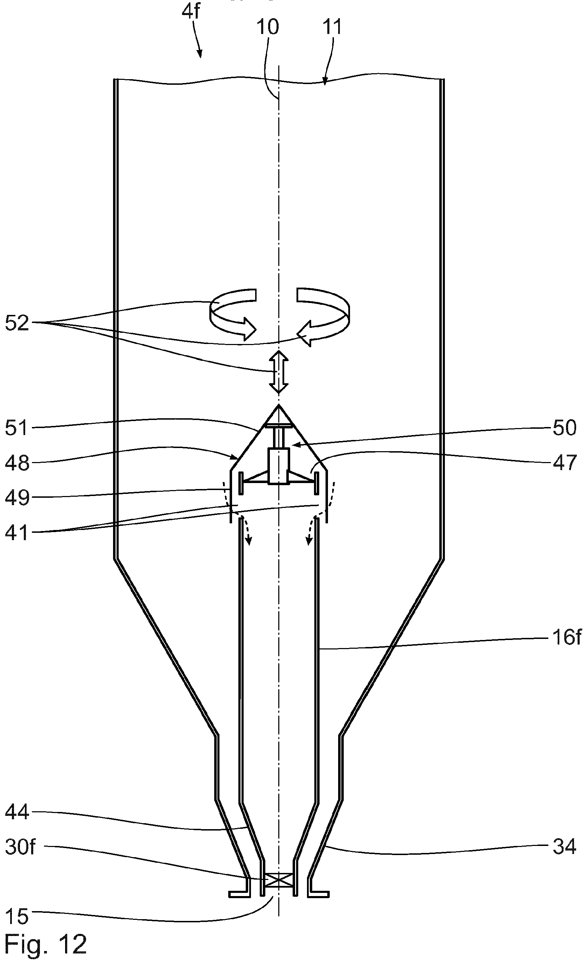

Im Folgenden wird unter Bezugnahme auf Fig. 12 eine weitere Ausführungsform der Erfindung beschrieben. Konstruktiv identische Teile erhalten dieselben Bezugszeichen wie bei den vorherigen Ausführungsformen, auf deren Beschreibung hiermit verwiesen wird. Konstruktiv unterschiedlich, jedoch funktionell gleichartige Teile erhalten dieselben Bezugszeichen mit einem nachgestellten f.

Das Mischsilo 4f ist als Rohrmischer mit einem zentralen Mischrohr 16f ausgeführt. Das Mischrohr 16f weist eine Bauhöhe, also eine Längserstreckung entlang der Längsachse 10, auf, die im Wesentlichen der Bauhöhe des Mischkonus des Konusmischers gemäß Fig. 2 entspricht. Insbesondere beträgt die Bauhöhe des Mischrohres 16f zwischen 80% und 120% der Bauhöhe des Mischkonus, insbesondere zwischen 90% und 110%.

An dem Mischrohr 16f ist mindestens eine Öffnung 41, insbesondere mehrere Öffnungen 41, vorgesehen, die den Einlauf des Mischrohres 16f bilden. Die Öffnungen 41 sind an einem der unteren Ablauföffnung 15 gegenüberliegenden Ende des Mischrohres 16f angeordnet. Die Öffnungen 41 sind in der Mantelwand des Mischrohres 16f angeordnet. Zusätzlich oder alternativ kann mindestens eine Öffnung stirnseitig an dem oberen Ende des Mischrohres 16f vorgesehen sein.

Insbesondere ist das Mischrohr 16f an seinem oberen, der unteren Ablauföffnung 15 gegenüberliegenden Ende 47 stirnseitig verschlossen. Als Absperrelement dient eine Haube 48, die relativ zu dem Mischrohr 16f verlagerbar ist. Die Haube 48 weist einen zylindrischen Ringabschnitt 49 auf, dessen Innendurchmesser mindestens so groß ist wie der Außendurchmesser des Mischrohres 16f. In der in Fig. 12 gezeigten Anordnung befindet sich der Ringabschnitt 49 in Überlappung mit den Öffnungen 41. Das bedeutet, dass Schüttgut aus dem Silobehälter 11 daran gehindert ist, in das Mischrohr 16f zu strömen. In der gezeigten Anordnung befindet sich das Mischrohr 16f durch das Absperrelement 48 im abgesperrten Zustand.

Die Haube 48 ist entlang der Längsachse 10 mittels eines Hubantriebs 50 verlagerbar. Der Hubantrieb 50 ist insbesondere ein linearer Hubantrieb, insbesondere ein pneumatischer Antrieb. Durch Betätigung des Hubantriebs wird die Haube 48 in einer Richtung 52 weg von dem Mischrohr 16f, also in einer Richtung weg von der unteren Ablauföffnung 15 verlagert. Dadurch werden die Öffnungen 41 von dem Ringabschnitt 49 freigegeben, sodass ein Schüttgutstrom über die Öffnungen 41 in das Mischrohr 16f ermöglicht ist.

Die Haube 48 weist einen oberen Kegelabschnitt 51 auf. Dadurch ist gewährleistet, dass das Schüttgut in dem Silobehälter 11 aufstauungsfrei an der Haube 48 entlangströmen kann. Die Haube 48 ist insbesondere einteilig ausgeführt. Das lineare Stellelement 50 greift insbesondere an dem Kegelabschnitt 51 der Haube 48 an.

Es ist alternativ auch möglich, in dem Zylinderabschnitt 49 Öffnungen vorzusehen, die im Wesentlichen den Öffnungen 41 in dem Mischrohr 16f entsprechen. Eine Verlagerung der Haube 48 zwischen der geöffneten und der abgesperrten Anordnung ist dann durch Drehung der Haube 48 um die Längsachse 10 möglich. Wenn die Öffnungen der Haube 48 und die Öffnungen 41 des Mischrohrs 16f zumindest teilweise fluchten, ist eine Schüttgutströmung in das Mischrohr 16f möglich. In diesem Fall ist die Verwendung des Hubantriebs 50 nicht erforderlich. Der Hubantrieb kann entsprechend durch einen Drehantrieb ersetzt werden, der eine Drehung der Haube 48 relativ zu dem Mischrohr 16f ermöglicht.

Die Hubbewegung und/oder mögliche Drehbewegungen der Haube 48 sind durch Bewegungspfeile 52 in Fig. 12 schematisch dargestellt.

Alternativ ist es auch möglich, das obere Ende 47 des Mischrohrs 16f mittels eines statischen Einbaus, beispielsweise einer kegelförmigen Haube, zu verschließen. An den Öffnungen 41 können dann Absperrelemente 45 angeordnet sein, wie sie anhand der vorherigen Ausführungsform erläutert worden sind.

Gemäß der gezeigten Ausführungsform ist zusätzlich zu dem Absperrelement 48 am Einlauf des Mischrohrs 16f das Absperrelement 30f am unteren Ende des Mischrohrs 16f, also am Auslauf, angeordnet. Dieses Absperrelement 30f kann auch entfallen, insbesondere wenn der Einlauf mittels mindestens eines Absperrelements 45, 48 absperrbar ist.

Der wesentliche Vorteil der Anordnung der Absperrelemente 45, 48 am Einlauf des Mischrohrs 16f besteht darin, dass stagnierendes Produkt in dem Mischrohr 16f vermieden werden kann. Dadurch wird das Risiko minimiert und insbesondere vermieden, dass stagnierendes Schüttgut im Mischrohr 16f sich festsetzt und nicht oder nur aufwendig nur wieder gelöst werden kann.

## Patentansprüche

1. Mischsilo für Schüttgut umfassend

   a. einen Silobehälter (11),
   b. einen Mischeinbau (16, 19; 40; 16e) zum Mischen des Schüttguts,
   c. mindestens ein Absperrelement (18, 21; 30; 30b; 30c; 30d, 42; 30e, 45, 46; 45, 48) zum Absperren des Mischeinbaus (16, 19; 40; 16e; 16f), wobei das mindestens eine Absperrelement (18, 21; 30; 30b; 30c; 30d, 42; 30e, 45, 46; 45, 48) zwischen einer Schließstellung, in der ein Schüttgutstrom durch den Mischeinbau (16, 19; 40; 16e) verhindert ist und das Mischsilo (4; 4a; 4b; 4c; 4d; 4e; 4f) eine Durchflussfunktion aufweist, und einer Offenstellung, in der ein Schüttgutstrom durch den Mischeinbau (16, 19; 40; 16e) möglich ist und das Mischsilo (4; 4a; 4b; 4c; 4d; 4e; 4f) eine Mischfunktion aufweist, verlagerbar ist,

   - wobei das mindestens eine Absperrelement (18, 21; 30; 30b; 30c; 30d, 42; 30e, 45, 46; 45, 48) an und/oder in dem Mischeinbau (16, 19; 40; 16e; 16f) angeordnet ist, wobei das mindestens eine Absperrelement (18, 21; 30; 30b; 30c; 30d, 42; 30e, 45, 46; 45, 48) am Auslauf des Mischeinbaus (16, 19; 40; 16e; 16f) angeordnet ist,
   - wobei das Mischsilo (4; 4a; 4b; 4c; 4d; 4e; 4f) eine Mindestabzugsleistung aufweist,
   - wobei der Silobehälter (11) bei abgesperrtem Mischeinbau (16, 19; 40; 16e; 16f) eine für den Silobehälter (11) limitierende Restquerschnittsfläche (26) derart aufweist, dass ein Massestrom des Schüttguts die Durchflussfunktion gewährleistet und größer oder gleich der Mindestabzugsleistung des Mischsilos (4; 4a; 4b; 4c; 4d; 4e; 4f) ist, wobei die limitierende Restquerschnittsfläche (26) eine minimale Querschnittsfläche des Silobehälters (11) entlang der Strömungsrichtung (24) des Schüttguts darstellt,

   **dadurch gekennzeichnet, dass** der Mischeinbau im Silobehälter befestigt ist, und dass die Mindestabzugsleistung mindestens 20 t/h für Kunststoff-Schüttgut umfassend Pulver mit einer mittleren Korngröße zwischen 50 μm und 2000 μm und/oder Granulat mit einer mittleren Korngröße von 1500 μm bis 6000 μm beträgt.

2. Mischsilo gemäß Anspruch 1, **dadurch gekennzeichnet, dass** der Silobehälter (11) einen Grundbehälter (12), der insbesondere zylindrisch ausgeführt ist, und einen, insbesondere konischen, Bodenabschnitt (13) aufweist.

3. Mischsilo gemäß einem der vorstehenden Ansprüche, **dadurch gekennzeichnet, dass** der Mischeinbau mindestens ein Mischrohr (16; 40; 16e; 16f) und/oder mindestens einen Mischkonus (19) aufweist.

4. Mischsilo gemäß Anspruch 3, **dadurch gekennzeichnet, dass** das mindestens eine Mischrohr (16; 40; 16e; 16f) und/oder der mindestens eine Mischkonus (19) in einen Sammeltopf (28) münden, wobei insbesondere das mindestens eine Absperrelement (18, 21; 30; 30b; 30c; 30d, 42; 30e, 45, 46; 45, 48) an und/oder in dem Sammeltopf (28) angeordnet ist.

5. Mischsilo gemäß einem der vorstehenden Ansprüche, **gekennzeichnet durch** einen mit dem mindestens einen Absperrelement (18, 21; 30; 30b; 30c; 30d, 42; 30e, 45, 46; 45, 48) verbundenen Absperrantrieb (33) zum angetriebenen Betätigen des mindestens einen Absperrelements (18, 21; 30; 30b; 30c; 30d, 42; 30e, 45, 46; 45, 48).

6. Mischsilo gemäß Anspruch 5, **gekennzeichnet durch** eine mit dem Absperrantrieb (33) in Signalverbindung stehende Steuereinheit (36) zum automatisierten Betätigen des mindestens einen Absperrelements (18, 21; 30; 30b; 30c; 30d, 42; 30e, 45, 46; 45, 48).

7. Mischsilo gemäß einem der vorstehenden Ansprüche, **dadurch gekennzeichnet, dass** das mindestens eine Absperrelement (18, 21; 30; 30b; 30c; 30d, 42; 30e, 45, 46) als Klappenscheibe (30) ausgeführt ist.

8. Herstellungsanlage mit

   a. einem Herstellungsreaktor (2) zum Herstellen von Schüttgut,
   b. einem Mischsilo (4; 4a; 4b; 4c; 4d; 4e; 4f) gemäß einem der vorstehenden Ansprüche,
   c. einer Zufördereinheit (3) zum Zufördern von Schüttgut, insbesondere aus dem Herstellungsreaktor (2), in das Mischsilo (4; 4a; 4b; 4c; 4d; 4e; 4f).

9. Herstellungsanlage gemäß Anspruch 8, **gekennzeichnet durch** eine Rezirkulationseinheit (9), die die Abfördereinheit (5) mit der Zufördereinheit (3) für eine Rezirkulation des Schüttguts verbindet.

10. Verfahren zum Betreiben eines Mischsilos (4; 4a; 4b; 4c; 4d; 4e; 4f) gemäß einem der Ansprüche 1 bis 7 umfassend die Verfahrensschritte

    - Zufördern von Schüttgut in das Mischsilo (4; 4a; 4b; 4c; 4d; 4e; 4f),
    - Mischen des Schüttguts in dem Mischsilo (4; 4a; 4b; 4c; 4d; 4e; 4f) mittels des Mischeinbaus (16, 19; 40; 16e; 16f),
    - Absperren des Mischeinbaus (16, 19; 40; 16e; 16f) mittels des mindestens einen Absperrelements (18, 21; 30; 30b; 30c; 30d, 42; 30e, 45, 46; 45, 48), wobei das mindestens eine Absperrelement (18, 21; 30; 30b; 30c; 30d, 42; 30e, 45, 46; 45, 48) zwischen einer Schließstellung, in der ein Schüttgutstrom durch den Mischeinbau (16, 19; 40; 16e) verhindert ist und das Mischsilo (4; 4a; 4b; 4c; 4d; 4e; 4f) eine Durchflussfunktion aufweist, und einer Offenstellung, in der ein Schüttgutstrom durch den Mischeinbau (16, 19; 40; 16e) möglich ist und das Mischsilo (4; 4a; 4b; 4c; 4d; 4e; 4f) eine Mischfunktion aufweist, verlagerbar ist, wobei das mindestens eine Absperrelement (18, 21; 30; 30b; 30c; 30d, 42; 30e, 45, 46; 45, 48) an und/oder in dem Mischeinbau (16, 19; 40; 16e; 16f) angeordnet ist, wobei das mindestens eine Absperrelement (18, 21; 30; 30b; 30c; 30d, 42; 30e, 45, 46; 45, 48) am Auslauf des Mischeinbaus (16, 19; 40; 16e; 16f) angeordnet ist,
    - Abfördern des Schüttguts aus dem Mischsilo (4; 4a; 4b; 4c; 4d; 4e; 4f) bei abgesperrtem Mischeinbau (16, 19; 40; 16e; 16f) über die limitierende Restquerschnittsfläche (26) und die Auslaufquerschnittsfläche am Auslauf des Silobehälters derart, dass ein Massestrom des Schüttguts die Durchflussfunktion gewährleistet und größer oder gleich der Mindestabzugsleistung von mindestens 20 t/h für KunststoffSchüttgut umfassend Pulver mit einer mittleren Korngröße zwischen 50 $\mu$m und 2000 $\mu$m und/oder Granulat mit einer mittleren Korngröße von 1500 $\mu$m bis 6000 $\mu$m des Mischsilos (4; 4a; 4b; 4c; 4d; 4e; 4f) ist.

11. Verfahren gemäß Anspruch 10, **dadurch gekennzeichnet, dass** das Absperren erfolgt, wenn ein Wechsel einer Schüttgut-Type und/oder einer Schüttgut-Güteklasse ansteht, insbesondere zu Beginn des Wechsels.

12. Verfahren gemäß Anspruch 10 oder 11, **dadurch gekennzeichnet, dass** mehrere, insbesondere sämtliche, Absperrelemente (18, 21; 30; 30b; 30c; 30d, 42; 30e, 45, 46; 45, 48) zum Absperren des Mischeinbaus (16, 19; 40; 16e; 16f) verwendet werden.

13. Verfahren gemäß einem der Ansprüche 10 bis 12, **dadurch gekennzeichnet, dass** das mindestens eine Absperrelement (18, 21; 30; 30b; 30c; 30d, 42; 30e, 45, 46; 45, 48) nach Ablauf einer veränderlich einstellbaren Wechselzeit (t) wieder geöffnet wird.

14. Verfahren gemäß einem der Ansprüche 10 bis 13, **dadurch gekennzeichnet, dass** die maximale Verweilzeit des Schüttguts im Mischsilo (4; 4a; 4b; 4c; 4d; 4e; 4f) bei abgesperrtem Mischeinbau (16, 19; 40; 16e; 16f) dem 1,0-fachen bis 1,4-fachen einer maximalen Verweilzeit eines sonst identischen Silobehälters ohne Mischeinbau (16, 19; 40; 16e; 16f) beträgt.

**Claims**

1. A mixing silo for bulk material comprising

   a. a silo container (11),
   b. a mixing installation (16, 19; 40; 16e) for mixing the bulk material,
   c. at least one shut-off element (18, 21; 30; 30b; 30c; 30d, 42; 30e, 45, 46; 45, 48) for shutting off the mixing installation (16, 19; 40; 16e; 16f), wherein the at least one shut-off element (18, 21; 30; 30b; 30c; 30d, 42; 30e, 45, 46; 45, 48) is movable between a closed position, in which a bulk material flow through the mixing installation (16, 19; 40; 16e) is prevented and the mixing silo (4; 4a; 4b; 4c; 4d; 4e; 4f) has a flow-through function, and an open position, in which a bulk material flow through the mixing installation (16, 19; 40; 16e) is possible and the mixing silo (4; 4a; 4b; 4c; 4d; 4e; 4f) has a mixing function,

- wherein the at least one shut-off element (18, 21; 30; 30b; 30c; 30d, 42; 30e, 45, 46; 45, 48) is arranged at and/or in the mixing installation (16, 19; 40; 16e; 16f), wherein the at least one shut-off element (18, 21; 30; 30b; 30c; 30d, 42; 30e, 45, 46; 45, 48) is arranged at the outlet of the mixing installation (16, 19; 40; 16e; 16f),
- wherein the mixing silo (4; 4a; 4b; 4c; 4d; 4e; 4f) has a minimum extraction rate,
- wherein the silo container (11), with the mixing installation (16, 19; 40; 16e; 16f) shut off, has a residual cross-sectional area (26) that is limiting to the silo container (11) in such a manner that a mass flow of the bulk material ensures the flow-through function and is greater than or equal to the minimum extraction rate of the mixing silo (4; 4a; 4b; 4c; 4d; 4e; 4f), wherein the limiting residual cross-sectional area (26) represents a minimum cross-sectional area of the silo container (11) along the flow direction (24) of the bulk material,

**characterized in that** the mixing installation is fastened in the silo container, and that the minimum extraction rate is at least 20 t/h for plastic bulk material comprising powder with an average particle size of between 50 $\mu$m and 2000 $\mu$m and/or granulate with an average particle size of 1500 $\mu$m to 6000 $\mu$m,

2. A mixing silo according to claim 1, **characterized in that** the silo container (11) has a base container (12), which is in particular designed so as to be cylindrical, and a bottom section (13), which is in particular conical.

3. A mixing silo according to any one of the preceding claims, **characterized in that** the mixing installation comprises at least one mixing tube (16; 40; 16e; 16f) and/or at least one mixing cone (19).

4. A mixing silo according to claim 3, **characterized in that** the at least one mixing tube (16; 40; 16e; 16f) and/or the at least one mixing cone (19) open into a collecting pot (28), wherein in particular the at least one shut-off element (18, 21; 30; 30b; 30c; 30d, 42; 30e, 45, 46; 45, 48) is arranged at and/or in the collecting pot (28).

5. A mixing silo according to any one of the preceding claims, **characterized by** a shut-off drive (33) connected to the at least one shut-off element (18, 21; 30; 30b; 30c; 30d, 42; 30e, 45, 46; 45, 48) for driven actuation of the at least one shut-off element (18, 21; 30; 30b; 30c; 30d, 42; 30e, 45, 46; 45, 48).

6. A mixing silo according to claim 5, **characterized by** a control unit (36) in signal connection with the shut-off drive (33) for automated actuation of the at least one shut-off element (18, 21; 30; 30b; 30c; 30d, 42; 30e, 45, 46; 45, 48).

7. A mixing silo according to any one of the preceding claims, **characterized in that** the at least one shut-off element (18, 21; 30; 30b; 30c; 30d, 42; 30e, 45, 46) is designed as a flap disc (30).

8. A production plant having

a. a production reactor (2) for producing bulk material,
b. a mixing silo (4; 4a; 4b; 4c; 4d; 4e; 4f) according to any one of the preceding claims,
c. a feed unit (3) for feeding bulk material, in particular from the production reactor (2), into the mixing silo (4; 4a; 4b; 4c; 4d; 4e; 4f).

9. A production plant according to claim 8, **characterized by** a recirculation unit (9) connecting the discharge unit (5) to the feed unit (3) for a recirculation of the bulk material.

10. A method for operating a mixing silo (4; 4a; 4b; 4c; 4d; 4e; 4f) according to any one of claims 1 to 7 comprising the method steps of

- feeding bulk material into the mixing silo (4; 4a; 4b; 4c; 4d; 4e; 4f),
- mixing of the bulk material in the mixing silo (4; 4a; 4b; 4c; 4d; 4e; 4f) by means of the mixing installation (16, 19; 40; 16e; 16f),
- shutting off the mixing installation (16, 19; 40; 16e; 16f) by means of the at least one shut-off element (18, 21;

30; 30b; 30c; 30d, 42; 30e, 45, 46; 45, 48), wherein the at least one shut-off element (18, 21; 30; 30b; 30c; 30d, 42; 30e, 45, 46; 45, 48) is movable between a closed position, in which a bulk material flow through the mixing installation (16, 19; 40; 16e) is prevented and the mixing silo (4; 4a; 4b; 4c; 4d; 4e; 4f) has a flow-through function, and an open position, in which a bulk material flow through the mixing installation (16, 19; 40; 16e) is possible and the mixing silo (4; 4a; 4b; 4c; 4d; 4e; 4f) has a mixing function, wherein the at least one shut-off element (18, 21; 30; 30b; 30c; 30d, 42; 30e, 45, 46; 45, 48) is arranged at and/or in the mixing installation (16, 19; 40; 16e; 16f), wherein the at least one shut-off element (18, 21; 30; 30b; 30c; 30d, 42; 30e, 45, 46; 45, 48) is arranged at the outlet of the mixing installation (16, 19; 40; 16e; 16f),
- discharging the bulk material from the mixing silo (4; 4a; 4b; 4c; 4d; 4e; 4f) with the mixing installation (16, 19; 40; 16e; 16f) shut off, over the limiting residual cross-sectional area (26) and the outlet cross-sectional area at the outlet of the silo container in such a manner that a mass flow of the bulk material ensures the flow-through function and is greater than or equal to the minimum extraction rate of at least 20 t/h for plastic bulk material comprising powder having an average particle size between 50 $\mu$m and 2000 $\mu$m and/or granulate having an average particle size of 1500 $\mu$m to 6000 $\mu$m of the mixing silo (4; 4a; 4b; 4c; 4d; 4e; 4f).

**11.** A method according to claim 10, **characterized in that** the shut-off takes place when a change of a bulk material type and/or a bulk material quality class is pending, in particular at the beginning of the change.

**12.** A method according to claim 10 or 11, **characterized in that** a plurality of, in particular all, shut-off elements (18, 21; 30; 30b; 30c; 30d, 42; 30e, 45, 46; 45, 48) are used for shutting off the mixing installation (16, 19; 40; 16e; 16f).

**13.** A method according to any one of claims 10 to 12, **characterized in that** the at least one shut-off element (18, 21; 30; 30b; 30c; 30d, 42; 30e, 45, 46; 45, 48) is opened again after a variably adjustable changeover time (t) has elapsed.

**14.** A method according to any one of claims 10 to 13, **characterized in that** the maximum dwell time of the bulk material in the mixing silo (4; 4a; 4b; 4c; 4d; 4e; 4f) with the mixing installation (16, 19; 40; 16e; 16f) shut off is 1.0 times to 1.4 times a maximum dwell time of an otherwise identical silo container without mixing installation (16, 19; 40; 16e; 16f).

## Revendications

**1.** Silo de mélange pour matériau en vrac comprenant

    a. un silo (11),
    b. un composant de mélange (16, 19 ; 40 ; 16e) pour mélanger le matériau en vrac,
    c. au moins un élément de blocage (18, 21 ; 30 ; 30b ; 30c ; 30d, 42 ; 30e, 45, 46 ; 45, 48) pour bloquer le composant de mélange (16, 19 ; 40 ; 16e ; 16f), ledit au moins un élément de blocage (18, 21 ; 30 ; 30b ; 30c ; 30d, 42 ; 30e, 45, 46 ; 45, 48) pouvant être déplacé entre une position de fermeture, dans laquelle un flux de matériau en vrac à travers le composant de mélange (16, 19 ; 40 ; 16e) est empêché et le silo de mélange (4 ; 4a ; 4b ; 4c ; 4d ; 4e ; 4f) présente une fonction de débit, et une position ouverte dans laquelle un flux de matériau en vrac est possible à travers le composant de mélange (16, 19 ; 40 ; 16e) et le silo de mélange (4 ; 4a ; 4b ; 4c ; 4d ; 4e ; 4f) présente une fonction de mélange,

        - dans lequel ledit au moins un élément de blocage (18, 21 ; 30 ; 30b ; 30c ; 30d, 42 ; 30e, 45, 46 ; 45, 48) est disposé sur et/ou dans le composant de mélange (16, 19 ; 40 ; 16e ; 16f), ledit au moins un élément de blocage (18, 21 ; 30 ; 30b ; 30c ; 30d, 42 ; 30e, 45, 46 ; 45, 48) étant disposé à la sortie du composant de mélange (16, 19 ; 40 ; 16e ; 16f),
        - dans lequel le silo de mélange (4 ; 4a ; 4b ; 4c ; 4d ; 4e ; 4f) présente une capacité d'extraction minimale,
        - dans lequel le silo (11) présente, lorsque le composant de mélange (16, 19 ; 40 ; 16e ; 16f) est bloqué, une surface de section transversale résiduelle limitante (26) pour le silo (11) de telle sorte qu'un flux massique du matériau en vrac garantit la fonction de débit et est supérieur ou égal à la capacité d'extraction minimale du silo de mélange (4 ; 4a ; 4b ; 4c ; 4d ; 4e ; 4f), la surface de section transversale résiduelle limitante (26) représentant une surface de section transversale minimale du silo (11) le long de la direction d'écoulement (24) du matériau en vrac,

caractérisé en ce que le composant de mélange est fixé dans le silo et en ce que la capacité d'extraction minimale est d'au moins 20 t/h pour les matières plastiques en vrac comprenant de la poudre avec une granulométrie moyenne

comprise entre 50 μm et 2000 μm et/ou des granulés avec une granulométrie moyenne comprise entre 1500 μm et 6000 μm.

2. Silo de mélange selon la revendication 1, **caractérisé en ce que** le silo (11) présente un récipient de base (12), qui est réalisé en particulier de manière cylindrique, et une section de fond (13), en particulier conique.

3. Silo de mélange selon l'une quelconque des revendications précédentes, **caractérisé en ce que** le composant de mélange comprend au moins un tube de mélange (16 ; 40 ; 16e ; 16f) et/ou au moins un cône de mélange (19).

4. Silo de mélange selon la revendication 3, **caractérisé en ce que** ledit au moins un tube de mélange (16 ; 40 ; 16e ; 16f) et/ou ledit au moins un cône de mélange (19) débouchent dans un pot collecteur (28), ledit au moins un élément de blocage (18, 21 ; 30 ; 30b ; 30c ; 30d, 42 ; 30e, 45, 46 ; 45, 48) étant en particulier disposé sur et/ou dans le pot collecteur (28).

5. Silo de mélange selon l'une quelconque des revendications précédentes, **caractérisé par** un entraînement de blocage (33) relié audit au moins un élément de blocage (18, 21 ; 30 ; 30b ; 30c ; 30d, 42 ; 30e, 45, 46 ; 45, 48) pour actionner de manière entraînée l'au moins un élément de blocage (18, 21 ; 30 ; 30b ; 30c ; 30d, 42 ; 30e, 45, 46 ; 45, 48).

6. Silo de mélange selon la revendication 5, **caractérisé par** une unité de commande (36) en liaison de signalisation avec l'entraînement de blocage (33) pour l'actionnement automatisé dudit au moins un élément de blocage (18, 21 ; 30 ; 30b ; 30c ; 30d, 42 ; 30e, 45, 46 ; 45, 48).

7. Silo de mélange selon l'une quelconque des revendications précédentes, **caractérisé en ce que** ledit au moins un élément de blocage (18, 21 ; 30 ; 30b ; 30c ; 30d, 42 ; 30e, 45, 46) est réalisé sous forme de disque à clapet (30).

8. Installation de fabrication avec

   a. un réacteur de fabrication (2) pour la fabrication de matériau en vrac,
   b. un silo de mélange (4 ; 4a ; 4b ; 4c ; 4d ; 4e ; 4f) selon l'une quelconque des revendications précédentes,
   c. une unité d'alimentation (3) pour alimenter le silo de mélange (4 ; 4a ; 4b ; 4c ; 4d ; 4e ; 4f) en matériau en vrac, en particulier à partir du réacteur de fabrication (2).

9. Installation de fabrication selon la revendication 8, **caractérisée par** une unité de recirculation (9) qui relie l'unité d'évacuation (5) à l'unité d'alimentation (3) pour une recirculation du matériau en vrac.

10. Procédé de fonctionnement d'un silo de mélange (4 ; 4a ; 4b ; 4c ; 4d ; 4e ; 4f) selon l'une quelconque des revendications 1 à 7, comprenant les étapes de procédé suivantes

   - alimentation de matériau en vrac dans le silo de mélange (4 ; 4a ; 4b ; 4c ; 4d ; 4e ; 4f),
   - mélange du matériau en vrac dans le silo de mélange (4 ; 4a ; 4b ; 4c ; 4d ; 4e ; 4f) au moyen du composant de mélange (16, 19 ; 40 ; 16e ; 16f),
   - blocage du composant de mélange (16, 19 ; 40 ; 16e ; 16f) au moyen dudit au moins un élément de blocage (18, 21 ; 30 ; 30b ; 30c ; 30d, 42 ; 30e, 45, 46 ; 45, 48), ledit au moins un élément de blocage (18, 21 ; 30 ; 30b ; 30c ; 30d, 42 ; 30e, 45, 46 ; 45, 48) pouvant être déplacé entre une position de fermeture, dans laquelle un flux de matériau en vrac à travers le composant de mélange (16, 19 ; 40 ; 16e) est empêché et le silo de mélange (4 ; 4a ; 4b ; 4c ; 4d ; 4e ; 4f) présente une fonction de débit, et une position ouverte dans laquelle un flux de matériau en vrac à travers le composant de mélange (16, 19 ; 40 ; 16e) est possible et le silo de mélange (4 ; 4a ; 4b ; 4c ; 4d ; 4e ; 4f) présente une fonction de mélange, ledit au moins un élément de blocage (18, 21 ; 30 ; 30b ; 30c ; 30d, 42 ; 30e, 45, 46 ; 45, 48) étant disposé sur et/ou dans le composant de mélange (16, 19 ; 40 ; 16e ; 16f), ledit au moins un élément de blocage (18, 21 ; 30 ; 30b ; 30c ; 30d, 42 ; 30e, 45, 46 ; 45, 48) étant disposé à la sortie du composant de mélange (16, 19 ; 40 ; 16e ; 16f),
   - évacuation du matériau en vrac hors du silo de mélange (4 ; 4a ; 4b ; 4c ; 4d ; 4e ; 4f) lorsque le composant de mélange (16, 19 ; 40 ; 16e ; 16f) est bloqué par l'intermédiaire de la surface de section transversale résiduelle limitante (26) et de la surface de section transversale de sortie à la sortie du silo de telle sorte qu'un flux massique du produit en vrac garantit la fonction de débit et soit supérieur ou égal à la capacité d'extraction minimale d'au moins 20 t/h pour les matières plastiques en vrac comprenant de la poudre d'une granulométrie moyenne comprise entre 50 μm et 2000 μm et/ou des granulés d'une granulométrie moyenne comprise entre 1500 μm

et 6000 μm du silo de mélange (4; 4a ; 4b ; 4c ; 4d ; 4e ; 4f).

11. Procédé selon la revendication 10, **caractérisé en ce que** le blocage est effectué lorsqu'un changement d'un type de matériau en vrac et/ou d'une classe de qualité de matériau en vrac est prévu, en particulier au début du changement.

12. Procédé selon la revendication 10 ou 11, **caractérisé en ce que** plusieurs, en particulier tous les éléments de blocage (18, 21 ; 30 ; 30b ; 30c ; 30d, 42 ; 30e, 45, 46 ; 45, 48) sont utilisés pour bloquer la composant de mélange (16, 19 ; 40 ; 16e ; 16f).

13. Procédé selon l'une quelconque des revendications 10 à 12, **caractérisé en ce que** ledit au moins un élément de blocage (18, 21 ; 30 ; 30b ; 30c ; 30d, 42 ; 30e, 45, 46 ; 45, 48) est à nouveau ouvert après écoulement d'un temps de changement (t) réglable de manière variable.

14. Procédé selon l'une quelconque des revendications 10 à 13, **caractérisé en ce que** le temps de séjour maximal du matériau en vrac dans le silo de mélange (4 ; 4a ; 4b ; 4c ; 4d ; 4e ; 4f), lorsque le composant de mélange (16, 19 ; 40 ; 16e ; 16f) est bloqué, est de 1,0 fois à 1,4 fois un temps de séjour maximal d'un silo autrement identique sans composant de mélange (16, 19 ; 40 ; 16e ; 16f).

Fig. 1

EP 4 168 168 B1

Fig. 2

20

Fig. 3

Fig. 4

30

α

38

## Fig. 5

30

38

39

2 x α

## Fig. 6

30

38

39

## Fig. 7

Fig. 8

Fig. 9

Fig. 10

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102020207608
- DE 8810607 U1
- DE 1034464 B
- DE 102014108270 A1
- US 20060082138 A1